# EUROPÄISCHE PATENTSCHRIFT

(11) **EP 3 956 572 B1**
(45) Veröffentlichungstag und Bekanntmachung des Hinweises auf die Patenterteilung: **22.03.2023**
(21) Anmeldenummer: 20734519.0
(22) Anmeldetag: 23.06.2020
(51) Int. Cl.: F16B 41/00, F16B 43/00

(54) **VERBINDUNGSEINHEIT UND VERFAHREN ZUR HERSTELLUNG EINER VERBINDUNGSEINHEIT**
CONNECTION UNIT AND METHOD FOR PRODUCING A CONNECTION UNIT
UNITÉ DE RACCORDEMENT ET PROCÉDÉ DE FABRICATION D'UNE UNITÉ DE RACCORDEMENT

(30) Priorität: 28.06.2019 DE 102019209510
(43) Veröffentlichungstag der Anmeldung: 23.02.2022
(73) Patentinhaber: Schneider + Stahl Besitzunternehmen Gbr, 74214 Schöntal (DE)
(72) Erfinder: SCHNEIDER, Ewald, 74670 Forchtenberg (DE); STAHL, Simon, 74074 Heilbronn (DE); MEISEL, Ronald, 74749 Rosenberg-Sindolsheim (DE)
(74) Vertreter: Patentanwälte Magenbauer & Kollegen Partnerschaft mbB
(86) Internationale Anmeldenummer: PCT/EP2020/067476
(87) Internationale Veröffentlichungsnummer: WO 2020/260268

(56) Entgegenhaltungen:
- CH-A- 283 167
- DE-A1-102014 118 342
- FR-A5- 2 193 438
- JP-A- S58 166 115
- US-A- 5 256 020

## Beschreibung

Die Erfindung betrifft ein Verfahren zur Herstellung einer Verbindungseinheit, wobei die Verbindungseinheit über einen Verbinder mit einem eine Verbindungsstruktur aufweisenden Verbinderschaft und einem an dem Verbinderschaft angeordneten, den Verbinderschaft radial überragenden Verbinderkopf verfügt, und wobei die Verbindungseinheit außerdem über eine ringförmige Scheibe verfügt, die einen plastisch verformbaren ringförmigen Scheibenkörper und ein von dem ringförmigen Scheibenkörper umrahmtes, von dem Verbinderschaft durchsetztes Durchgangsloch aufweist, wobei der ringförmige Scheibenkörper eine eine Außenkontur des Scheibenkörper definierende Außenumfangsfläche und eine das Durchgangsloch peripher begrenzende, eine Innenkontur des Scheibenkörpers definierende Innenumfangsfläche hat, wobei zur verliersicheren Fixierung der auf dem Verbinderschaft sitzenden Scheibe die Innenkontur des Scheibenkörpers im auf dem Verbinderschaft sitzenden Zustand der Scheibe ausgehend von einer das vorherige Aufstecken der Scheibe auf den Verbinderschaft ermöglichenden vorläufigen Innenkontur durch plastische Umformung des Scheibenkörpers in eine ein unverlierbares Festhalten der Scheibe auf dem Verbinderschaft bewirkende, von der vorläufigen Innenkontur abweichende endgültige Innenkontur umgeformt wird.

Die Erfindung betrifft ferner eine Verbindungseinheit, mit einem Verbinder, der einen mit einer Verbindungsstruktur versehenen Verbinderschaft und einen an dem Verbinderschaft angeordneten Verbinderkopf aufweist, wobei der Verbinderkopf den Verbinderschaft radial überragt, und mit einer ringförmigen Schreibe, die einen aus einem plastisch verformbaren Material bestehenden ringförmigen Scheibenkörper aufweist, der ein von dem Verbinderschaft durchsetztes Durchgangsloch umrahmt, das peripher von einer Innenumfangsfläche des Scheibenkörpers begrenzt ist, die eine durch plastische Materialumformung des Scheibenkörpers erzeugte Innenkontur des Scheibenkörpers definiert, wobei diese Innenkontur so gestaltet ist, dass die Scheibe durch Zusammenwirken mit dem Verbinderschaft unverlierbar auf dem Verbinderschaft gehalten ist, und wobei der ringförmige Scheibenkörper eine eine Außenkontur des Scheibenkörpers definierende Außenumfangsfläche hat.

Aus der DE 10 2014 118 342 A1 ist eine als Befestigereinheit bezeichnete Verbindungseinheit der vorgenannten Art bekannt, die durch ein im vorstehenden Sinne ausgeführtes Verfahren herstellbar ist. Die bekannte Verbindungseinheit hat einen Verbinder mit einem Verbinderschaft und einem Verbinderkopf, wobei auf den mit einem Außengewinde versehenen Verbinderschaft eine unverlierbar fixierte ringförmige Scheibe aufgesteckt ist. Die Scheibe fungiert als Unterlegscheibe und/oder als Dichtscheibe. Die Verliersicherung der Scheibe resultiert daraus, dass ein ringförmiger Scheibenkörper der Scheibe im auf dem Verbinderschaft sitzenden Zustand im Bereich seiner Innenumfangsfläche derart radial nach innen gerichtet plastisch verformt wird, dass das Durchgangsloch verkleinert wird. Aus dieser Verkleinerung resultiert eine radiale Überlappung des Scheibenkörpers mit einem Ringvorsprung des Verbinderschaftes, sodass die Scheibe zwischen dem Verbinderkopf und dem Ringvorsprung gefangen ist und nicht mehr von dem Verbinderschaft herunterfallen kann.

Nach druckschriftlich nicht dokumentierter interner Kenntnis des Anmelders kann eine Verliersicherung einer Scheibe auf einem Schraubenschaft auch dadurch bewirkt werden, dass ein ringförmiger Scheibenkörper verwendet wird, der vor dem Aufstecken auf den Schraubenschaft sowohl radial außen als auch radial innen kreisrund konturiert ist und der im auf den Schraubenschaft aufgesteckten Zustand von zwei einander diametral entgegengesetzten Seiten her so zusammengedrückt wird, dass sich sowohl radial innen als auch radial außen eine ovale beziehungsweise elliptische Ringkontur einstellt. Bei ungünstigen Abmessungsverhältnissen kann dies allerdings dazu führen, dass der Schraubenkopf bei der bestimmungsgemäßen Verwendung der Schraubeinheit nicht komplett auf dem Scheibenkörper aufliegt, was umso problematischer ist, wenn mit der Scheibe eine Abdichtung bewirkt werden soll.

Aus der US 5 056 208 A ist es bekannt, einen Haltering, der an seinem Innenumfang über nach innen ragende rechteckige Zungen und an seinem Außenumfang über nach außen ragende Vorsprünge oder Kerben verfügt, mittels einer Zange derart radial zu verformen, dass die Zungen in Längsnuten des Schafts einer Schraube eingreifen, sodass der Haltering von dem Schaft nicht mehr abgenommen werden kann.

Gemäß DE 42 24 310 A1 wird ein Sicherungselement durch radiale Verformung in eine Ringnut eines Schafts hinein verformt, um eine Mutter zu fixieren. Das Sicherungselement hat außen drei radial abstehende Lappen, die bei der Verformung zur Krafteinleitung genutzt werden.

Der Erfindung liegt die Aufgabe zu Grunde, Maßnahmen zu treffen, durch die eine Scheibe kostengünstig und prozesssicher derart unverlierbar auf einem Verbinderschaft fixierbar ist, dass beim anschließenden bestimmungsgemäßen Gebrauch der Verbindungseinheit eine sichere Auflage des Verbinderkopfes auf der Scheibe gewährleistet werden kann.

Zur Lösung dieser Aufgabe ist bei einem Verfahren zur Herstellung einer Schraubeinheit der eingangs genannten Art vorgesehen,
- dass der ringförmige Scheibenkörper vor seiner plastischen Umformung mit einer von einer Kreisform abweichenden vorläufigen Außenkontur bereitgestellt und auf den Verbinderschaft aufgesteckt wird,
- und dass die die endgültige Innenkontur des ringförmigen Scheibenkörpers herbeiführende plastische Umformung des ringförmigen Scheibenkörpers durchgeführt wird, indem radiale Verformungskräfte in die die vorläufige Außenkontur aufweisende Außenumfangsfläche des auf dem Verbinderschaft sitzenden Schraubenkörpers eingeleitet werden,
- wobei die plastische Umformung des ringförmigen Scheibenkörpers so ausgeführt wird, dass die endgültige Innenkontur des ringförmigen Scheibenkörpers von einer Kreisform abweicht und gleichzeitig auch eine von der vorläufigen Außenkontur abweichende, zumindest im Wesentlichen kreisförmige endgültige Außenkontur des Scheibenkörpers geformt wird.

Bei dem erfindungsgemäßen Verfahren hat die verlierzusichernde Scheibe einen ringförmigen Scheibenkörper, der vor dem Aufstecken auf den Verbinderschaft und somit vor seiner plastischen Umformung eine vorläufige Außenkontur hat, die unkreisförmig gestaltet ist. Bei der anschließenden plastischen Umformung des ringförmigen Scheibenkörpers erfährt nicht nur die Innenkontur des Scheibenkörpers eine Gestaltänderung, sondern auch die Außenkontur des Scheibenkörpers. Es werden also die vor der plastischen Umformung vorhandene vorläufige Innenkontur und vorläufige Außenkontur des ringförmigen Scheibenkörpers durch den Umformvorgang in eine endgültige Innenkontur und in eine endgültige Außenkontur umgeformt, die von der jeweils vorausgegangenen vorläufigen Konturierung abweicht. Die für die Umformung erforderlichen Verformungskräfte werden im auf dem Verbinderschaft sitzenden Zustand des Scheibenkörpers mit radialer Orientierung in die noch die vorläufige Außenkontur aufweisende Außenumfangsfläche des Scheibenkörpers eingeleitet. Die plastische Umformung des ringförmigen Scheibenkörpers erfolgt derart, dass sich eine unkreisförmige endgültige Innenkontur einstellt. Aufgrund dieser unkreisförmigen endgültigen Innenkontur ergibt sich durch das Zusammenwirken der Scheibe mit dem Verbinderschaft eine derartige Verliersicherung, dass die Scheibe nicht mehr vom Verbinderschaft herunterfallen kann. Die endgültige Innenkontur kann dabei insbesondere so geformt werden, dass der Scheibenkörper zumindest partiell in eine vorgefertigte ringnutartige Vertiefung des Verbinderschaftes eintaucht und/oder mit der Außenumfangsfläche des Verbinderschaftes verpresst ist, sodass ein Presssitz vorliegt. Die plastische Umformung des ringförmigen Scheibenkörpers wird ferner so ausgeführt, dass sich eine zumindest im Wesentlichen kreisförmige endgültige Außenkontur des Scheibenkörpers ergibt. Bei der plastischen Umformung wird also die zunächst unkreisförmige Außenkontur in eine zumindest im Wesentlichen kreisrunde Form gedrückt. Dadurch kann ein besonders gleichmäßiger axialer Kontakt zwischen dem Verbinderkopf und dem Scheibenkörper beim anschließenden bestimmungsgemäßen Gebrauch der Schraubeinheit gewährleistet werden. Auch aus ästhetischer Sicht hat eine solche Umformung Vorteile, weil sich die Außenkontur der Scheibe ringsum gleichförmig an die Außenkontur des Verbinderkopfes anpasst.

Das Herstellungsverfahren lässt sich mit entsprechend angepassten Umformwerkzeugen einfach, kostengünstig und selbst bei hohen Stückzahlen sehr prozesssicher durchführen. Die Umformung kann gezielt so ausgeführt werden, dass trotz der von der Kreisform abweichenden endgültigen Innenkontur beim bestimmungsgemäßen Gebrauch der Schraubeinheit eine zuverlässige ringförmige Auflage des Schraubenkopfes auf dem Scheibenkörper gewährleistet ist. Das Herstellungsverfahren lässt sich unabhängig von einer bestimmten Formgebung des Verbinderschaftes anwenden, da der Umformvorgang problemlos verbinderschaftspezifisch ausführbar ist.

Beim bestimmungsgemäßen Gebrauch der hergestellten Verbindungseinheit fungiert die Scheibe beispielsweise als eine Unterlegscheibe und/oder als eine Dichtscheibe. Die unverlierbare Fixierung der Scheibe auf dem Verbinderschaft ermöglicht eine einheitliche Handhabung der beiden Komponenten als zu der Verbindungseinheit zusammengefasste Baugruppe bei der Lagerhaltung, beim Transport und bei der Anwendung. Ein umständliches Zusammenfügen von Verbinder und Scheibe zu der Verbindungseinheit durch den Anwender unmittelbar vor der bestimmungsgemäßen Verwendung erübrigt sich. Zudem kann sichergestellt werden, dass die Verbindungseinheit stets eine funktionsgerechte Kombination von Verbinder und Scheibe umfasst.

Vorteilhafte Weiterbildungen des erfindungsgemäßen Verfahrens gehen aus den Unteransprüchen hervor.

Die plastische Umformung des ringförmigen Scheibenkörpers wird insbesondere so ausgeführt, dass sich eine endgültige Innenkontur der Umfangsfläche einstellt, bei der sich in der Umfangsrichtung des Durchgangsloches aufeinanderfolgende Flächenabschnitte der Innenumfangsfläche abwechseln, deren radialer Abstand zum Zentrum der Scheibe unterschiedlich groß ist.

Als günstig wird es angesehen, wenn der ringförmige Scheibenkörper derart plastisch umgeformt wird, dass die Innenumfangsfläche nach der Ausbildung der endgültigen Innenkontur über in der Umfangsrichtung des Durchgangsloches abwechselnd aufeinanderfolgende konkav gekrümmte und konvex gekrümmte Flächenabschnitte verfügt. Es sind dann insbesondere die über die konvex gekrümmten Flächenabschnitte verfügenden Bereiche des ringförmigen Scheibenkörpers, die zur Verliersicherung mit dem Verbinderschaft mechanisch zusammenwirken. Die konvex konturierten Flächenabschnitte stehen zweckmäßigerweise bezüglich den konkav gekrümmten Flächenabschnitten radial nach innen zum Zentrum der Scheibe hin vor.

Als ebenfalls vorteilhaft wird es erachtet, wenn die plastische Umformung so ausgeführt wird, dass die endgültige Innenkontur des Scheibenkörpers durchweg konkav gekrümmt ist, wobei sich in der Umfangsrichtung des Durchgangsloches Flächenabschnitte der Innenumfangsfläche mit unterschiedlich starker Krümmung abwechseln. Eine solche endgültige Innenkontur ist beispielsweise oval oder elliptisch bogenförmig gestaltet.

Der zur fixierende Scheibenkörper wird vor dem Aufstecken auf den Verbinderschaft mit einer vorläufigen Innenkontur bereitgestellt, die dem Durchgangsloch eine ausreichend große Querschnittsfläche verleiht, um ein problemloses Aufstecken auf den Verbinderschaft zu ermöglichen. Das Aufstecken des ringförmigen Scheibenkörpers auf den Verbinderschaft, das damit einhergeht, dass der Verbinderschaft das Durchgangsloch durchsetzt, lässt sich besonders einfach bewerkstelligen, wenn es sich bei der vorläufigen Innenkontur des Scheibenkörpers um eine runde Innenkontur handelt, wobei diese runde Innenkontur bevorzugt zumindest im Wesentlichen kreisrund ist.

Bei der von der Kreisform abweichenden vorläufigen Außenkontur des ringförmigen Scheibenkörpers handelt es sich zweckmäßigerweise um eine in der Umfangsrichtung des Durchgangsloches ringsum konvex gekrümmte vorläufige Außenkontur, bei der sich Flächenabschnitte unterschiedlich starker Krümmung in der Umfangsrichtung des Durchgangsloches abwechseln.

Beispielsweise hat der ringförmige Scheibenkörper vor seiner plastischen Umformung eine mehreckige vorläufige Außenkontur, die in der Umfangsrichtung des Durchgangsloches und somit auch an den Eckbereichen ringsum konvex abgerundet ist. Zweckmäßigerweise ist dabei die konvexe Krümmung in den Eckbereichen stärker als in den zwischen den Eckbereichen liegenden Bereichen des Scheibenkörpers. Bei der mehreckigen Kontur handelt es sich vorzugsweise um eine gleichmäßige abgerundete Polygonkontur.

Als besonders vorteilhaft hat es sich erwiesen, den ringförmigen Scheibenkörper vor seiner plastischen Umformung mit einer trilobularen vorläufigen Außenkontur bereitzustellen und auf den Verbinderschaft aufzustecken. Die trilobulare Kontur äußert sich in einer dreieckigen Grundform der Außenkontur, die allerdings durchweg abgerundet ist, wobei der Durchmesser der ringförmigen Außenkontur an jeder Stelle des Außenumfanges gleich groß ist. Es liegen lediglich Lageabweichungen bei den Durchmesserzentren vor. Es liegen sich jeweils Außenkonturabschnitte mit großem und kleinem Krümmungsradius paarweise diametral gegenüber.

Eine andere vorläufige Außenkontur, die sich sehr gut für das erfindungsgemäße Verfahren eignet, ist oval oder elliptisch geformt

Bei der plastischen Umformung des ringförmigen Scheibenkörpers werden zweckmäßigerweise die radial erhaben ausgebildeten Bereiche der vorläufigen Außenkontur radial in Richtung zum Scheibenzentrum verformt, wobei die Verformung zur Folge hat, dass sich das metallische Material am Innenumfang der Scheibe in Richtung zum Scheibenzentrum verlagert. In Verbindung mit einer kreisrunden vorläufigen Innenkontur und einer dahingehenden Umformung, dass die endgültige Außenkontur kreisrund ist, äußert sich das Verformungsverhalten des Scheibenkörpers insbesondere darin, dass sich die unkreisförmige vorläufige Außenkontur auf eine entsprechend geformte endgültige Innenkontur überträgt.

Bei einem als besonders vorteilhaft angesehenen Verfahrensablauf wird der ringförmige Scheibenkörper vor seiner plastischen Umformung mit einer derartigen vorläufigen Außenkontur und vorläufigen Innenkontur bereitgestellt, dass er in der Umfangsrichtung des Durchgangsloches abwechselnd aufeinanderfolgende Ringsegmente mit voneinander abweichender radialer Dicke hat, sodass sich Ringsegmente minimaler radialer Dicke mit Ringsegmenten maximaler radialer Dicke in der Umfangsrichtung des Durchgangsloches abwechseln. Bei der plastischen Umformung werden die radialen Verformungskräfte so eingeleitet, dass der Scheibenkörper nach der plastischen Umformung weiterhin über in der Umfangsrichtung des Durchgangsloches abwechseln aufeinanderfolgende Ringsegmente minimaler radialer Dicke und Ringsegmente maximaler radialer Dicke verfügt, wobei allerdings die an den Ringsegmenten maximaler radialer Dicke ausgebildeten Flächenabschnitte der Innenumfangsfläche und der Außenumfangsfläche des ringförmigen Scheibenkörpers nach der plastischen Umformung einen geringeren Abstand zum Zentrum der Scheibe haben als vor der plastischen Umformung. Bei den Ringsegmenten minimaler radialer Dicke ist der Abstand der zur Innenumfangsfläche gehörenden Flächenabschnitte vom Zentrum der Scheibe nach der Umformung bevorzugt gleich groß oder größer als vor der Umformung.

Auch wenn der Verbinderschaft in dem Bereich, in dem sich die Scheibe befindet, einen Außendurchmesser hat, der größer oder gleich groß ist wie der sich zum freien Schaftende hin anschließende Längenabschnitt des Verbinderschaftes, kann die Scheibe zuverlässig verliersicher fixiert werden, wenn der ringförmige Scheibenkörper bei seiner plastischen Verformung derart radial auf den Verbinderschaft aufgepresst wird, dass er an seiner Innenumfangsfläche mit radialem Presssitz mit dem Verbinderschaft verspannt ist.

Eine Presssitzbefestigung des Scheibenkörpers lässt sich bei Bedarf auch dann durchführen, wenn die Scheibe im Bereich einer ringnutartigen Vertiefung auf dem Verbinderschaft sitzt. Der Scheibenkörper wird dann mit der Grundfläche der ringförmigen Vertiefung verpresst.

Der Scheibenkörper kann zur Fixierung auf dem Verbinderschaft auch derart umgeformt werden, dass er ohne radialen Presssitz lose auf dem Verbinderschaft fixiert ist. Dies in Fällen, in denen der Verbinder und insbesondere der Verbinderschaft an seinem Außenumfang so strukturiert ist, dass der umgeformte Scheibenkörper axial abgestützt wird, beispielsweise indem der Scheibenkörper in eine ringnutartige Vertiefung des Verbinderschaftes radial hinein verformt wird.

Die ringnutartige Vertiefung, die beispielsweise als Einstich spanend gefertigt wird, kann an beliebiger Stelle entlang des Verbinderschaftes platziert sein.

Bei einer zweckmäßigen Ausgestaltung des Verfahrens wird der Verbinderschaft vor dem Aufstecken der unverlierbar zu fixierenden Scheibe mit einer ringnutartigen Vertiefung bereitgestellt, die auf der Seite des freien Endes des Verbinderschaftes von einer dem Verbinderkopf zugewandten vorderen Vertiefungsflanke begrenzt ist. Die Scheibe wird vor der plastischen Umformung des Scheibenkörpers so auf den Verbinderschaft aufgesteckt, dass sie axial auf Höhe der ringnutartigen Vertiefung zu liegen kommt. Die daran anschließende plastische Umformung des Scheibenkörpers erfolgt derart, dass die Innenumfangsfläche des Scheibenkörpers zumindest partial in die ringnutartige Vertiefung eintaucht und sich eine radiale Überlappung zwischen dem Scheibenkörper und der vorderen Vertiefungsflanke der ringnutartigen Vertiefung einstellt.

Bevorzugt wird der Verbinderschaft bei einer Ausgestaltung als Schraubenschaft mit einer dahingehenden Formgebung bereitgestellt, dass die vordere Vertiefungsflanke unmittelbar einen Außengewindeabschnitt des Schraubenschaftes axial begrenzt. Hiervon abweichend kann die ringnutartige Vertiefung allerdings auch mit axialem Abstand zu einem eventuell vorhandenen Außengewindeabschnitt ausgebildet sein.

Die ringnutartige Vertiefung kann auch dadurch realisiert sein oder werden, dass der Verbinderschaft mit axialem Abstand zu dem Verbinderkopf über einen radial abstehenden Ringbund verfügt.

Der Scheibenkörper der Scheibe wird zur Ausbildung der vorläufigen Innenkontur und der vorläufigen Außenkontur zweckmäßigerweise als Stanzteil gefertigt. Alternativ kann der Scheibenkörper beispielsweise auch durch ein Gießverfahren oder durch spanende Bearbeitung, zum Beispiel durch Fräsen, hergestellt werden.

Bei dem zur Herstellung des Scheibenkörpers verwendeten Material handelt es sich beispielsweise um Metall wie Stahl oder ein Kupfermaterial. Grundsätzlich kann für den Scheibenkörpers jedoch jedes für eine plastische Verformung geeignete duktile Material verwendet werden, so beispielsweise auch ein Kunststoffmaterial oder auch ein Verbundmaterial.

Bevorzugt wird die Verbindungseinheit als Schraubeinheit hergestellt, wobei der Verbinder als Schraube ausgebildet wird und der Verbinderschaft mit einer als Außengewinde ausgebildeten Verbindungsstruktur versehen wird.

Der Verbinder kann beispielsweise als ein Bajonettverbinder realisiert werden, der an seinem Verbinderschaft eine Verbindungsstruktur aufweist, die als Bajonett-Verbindungsstruktur ausgebildet ist. Der Verbinder kann alternativ zum Beispiel auch ein Steckverbinder sein, der über eine federelastische Verbindungsstruktur am Verbinderschaft verfügt. Eine ebenfalls mögliche Ausgestaltung des Verbinders ist die eines Schraubverbinders, bei dem der Verbinderschaft eine Gewindestange und der Verbinderkopf mindestens eine auf die Gewindestange aufgeschraubte Mutter ist.

Besonders bevorzugt wird die Verbindungseinheit als eine Schraubeinheit ausgebildet, bei der der Verbinder eine Schraube ist, die als Verbinderschaft einen Schraubenschaft aufweist. Der Schraubenschaft verfügt über eine als Außengewinde ausgebildete Verbindungsstruktur. An dem Schraubenschaft ist fest und insbesondere einstückig ein Schraubenkopf als Verbinderkopf angeordnet.

Die der Erfindung zu Grunde liegende Aufgabe wird auch durch eine Verbindungseinheit gelöst, die sich ergänzend zu den eingangs genannten Merkmalen dadurch auszeichnet,
- dass der ringförmige Scheibenkörper als ein Umformteil ausgebildet ist, wobei die Innenkontur auf einer radialen plastischen Umformung des in gelochter Form bereitgestellten Scheibenkörpers beruht, die durch Einleitung einer radialen Verformungskraft in die radiale Außenumfangsfläche des Scheibenkörpers hervorgerufen wurde,
- dass die Außenkontur des ringförmigen Scheibenkörpers zumindest im Wesentlichen kreisförmig gestaltet ist,
- und dass die Innenkontur des ringförmigen Scheibenkörpers unkreisförmige gestaltet ist.

Auf diese Weise verfügt die Verbindungseinheit über eine verliersicher auf dem Verbinderschaft sitzende Scheibe, deren Scheibenkörper eine kreisförmige Außenkontur und eine unkreisförmige Innenkontur hat. Bei dieser Außenkontur und Innenkontur handelt es sich um endgültige Konturen, die aus der radialen plastischen Umformung des ringförmigen Scheibenkörpers resultieren, der als ein Umformteil ausgebildet ist, das vor der plastischen Umformung über eine nur vorläufige Innenkontur und Außenkontur verfügt. Durch die kreisförmige Außenkontur kann beim bestimmungsgemäßen Gebrauch der Schraubeinheit eine zuverlässige ringförmige axiale Auflage des Verbinderkopfes auf dem Scheibenkörper gewährleistet werden, sodass sich Anzugskräfte gleichmäßig übertragen lassen. Außerdem kann auf diese Weise eine zuverlässige Abdichtung gewährleistet werden, wenn die Scheibe als Dichtscheibe fungiert. Durch die unkreisförmige Innenkontur wird der ringförmige Scheibenkörper zuverlässig verliersicher auf dem Verbinderschaft festgehalten.

Bevorzugt ist die die Innenkontur des ringförmigen Scheibenkörpers definierende Innenumfangsfläche so geformt, dass sie über in der Umfangsrichtung des Durchgangsloches abwechselnd aufeinanderfolgende Flächenabschnitte unterschiedlich großen radialen Abstandes zum Zentrum der Scheibe verfügt.

Des Weiteren ist es vorteilhaft, wenn die Innenkontur des ringförmigen Scheibenkörpers durchweg konkav gekrümmt ist, wobei sich in der Umfangsrichtung des Durchgangsloches Flächenabschnitte der Innenumfangsfläche unterschiedlich starker Krümmung abwechseln.

Die Innenkontur des ringförmigen Scheibenkörpers ist bevorzugt oval oder elliptisch gestaltet. Eine alternative Gestaltung sieht vor, dass die Innenumfangsfläche über in der Umfangsrichtung des Durchgangsloches abwechselnd aufeinanderfolgende konkav gekrümmte und konvex gekrümmte Flächenabschnitte verfügt.

Als günstig wird es angesehen, wenn die Außenkontur und die Innenkontur des ringförmigen Scheibenkörpers derart geformt sind, dass der ringförmige Scheibenkörper über in der Umfangsrichtung des Durchgangsloches abwechseln aufeinanderfolgende Ringsegmente mit voneinander abweichender radialer Dicke verfügt, sodass sich Ringsegmente minimaler radialer Dicke mit Ringsegmenten maximaler radialer Dicke in der Umfangsrichtung des Durchgangsloches abwechseln, wobei die an den Ringsegmenten maximaler radialer Dicke ausgebildeten Flächenabschnitte der Innenumfangsfläche einen geringeren radialen Abstand zum Zentrum der Scheibe haben, als die an den Ringsegmenten minimaler radialer Dicke ausgebildeten Flächenabschnitte der Innenumfangsfläche.

Bevorzugt handelt es sich bei der Verbindungseinheit um eine Schraubeinheit, deren Verbinder eine Schraube ist, wobei der Verbinderschaft ein Schraubenschaft ist, der über ein Außengewinde) als Verbindungsstruktur verfügt.

Soweit es sich bei dem zur Durchführung des Herstellungsverfahrens oder zur Realisierung der Verbindungseinheit verwendeten Verbinder um eine Schraube handelt, hat diese Schraube bevorzugt einen Schraubenkopf, der zweckmäßigerweise mit einer Innenprofilierung und/oder mit einer Außenprofilierung versehen ist, um einen Werkzeugangriffsabschnitt zu bilden, an dem sich bei der bestimmungsgemäßen Verwendung der Verbindungseinheit ein Schraubwerkzeug ansetzen lässt. Die Innenprofilierung und/oder Außenprofilierung ist beispielsweise als Mehrkant und insbesondere als Sechskant ausgeführt.

Soweit davon gesprochen wird, dass eine Kontur zumindest im Wesentlichen kreisförmig gestaltet ist, bedeutet dies insbesondere, dass bevorzugt eine Kreisform vorliegt, aufgrund von Fertigungsmaßnahmen oder Fertigungstoleranzen aber auch geringfügige Abweichungen von einer Kreisform vorliegen können.

Unter einer konvex gekrümmten Fläche ist im Sinne der Erfindung insbesondere eine Oberfläche zu verstehen, die zum Betrachter hin vorstehend gewölbt ist, insbesondere derart, dass ein mittlerer Flächenbereich gegenüber diesbezüglich beidseits benachbarten Flächenbereichen hervortritt. Unter einer konkav gekrümmten Fläche ist im Sinne der Erfindung insbesondere eine Oberfläche zu verstehen, die vom Betrachter weg vertieft gewölbt ist, insbesondere derart, dass ein mittlerer Flächenbereich gegenüber diesbezüglich beidseits benachbarten Flächenbereichen zurücktritt.

Nachfolgend wird die Erfindung anhand der beiliegenden Zeichnung näher erläutert. In dieser zeigen:
- Figur 1: eine bevorzugte Ausführungsform der erfindungsgemäßen Verbindungseinheit in einer bevorzugten Ausgestaltung als Schraubeinheit in einem Längsschnitt gemäß Schnittlinie I-I aus Figur 2, wobei die Verbindungseinheit mittels des erfindungsgemäßen Verfahrens hergestellt ist,
- Figur 2: einen Querschnitt der Verbindungseinheit aus Figur 1 gemäß Schnittlinie II-II in Figur 1,
- Figur 3: einen Querschnitt der Verbindungseinheit aus Figuren 1 und 2 entsprechend der Schnittlinie II-II aus Figur 1 im auf dem Verbinderschaft zwar aufgesteckten, jedoch noch nicht plastisch umgeformten Zustand des Scheibenkörpers,
- Figur 4: ein weiteres Ausführungsbeispiel einer erfindungsgemäßen Verbindungseinheit in einem Längsschnitt gemäß Schnittlinie V-V aus Figur 5,
- Figur 5: einen Querschnitt der Verbindungseinheit aus Figur 4 gemäß Schnittlinie IV-IV in Figur 4, und
- Figur 6: einen Querschnitt der Verbindungseinheit aus Figuren 4 und 5 entsprechend der Schnittlinie V-V aus Figur 4 im auf dem Verbinderschaft zwar aufgesteckten, jedoch noch nicht plastisch umgeformten Zustand des Scheibenkörpers.

Die insgesamt mit Bezugsziffer 1 bezeichnete, in der Zeichnung in verschiedenen Ausgestaltungen illustrierte Verbindungseinheit enthält einen Verbinder 2 und eine ringförmig strukturierte Scheibe 3, die mit dem Verbinder 2 zu einer einheitlich handhabbaren Baugruppe zusammengefasst ist.

Die Scheibe 3 ist aufgrund einer besonderen Gestaltung, die durch vorausgegangene plastische Materialumformmaßnahmen hervorgerufen wurden, unter Bildung der Verbindungseinheit 1 unverlierbar mit dem Verbinder 2 vereinigt. Der Verbinder 2 hat eine Längserstreckung mit einer Längsachse 4. Die Scheibe 3 hat eine Längsachse 5 und sitzt zweckmäßigerweise zumindest im Wesentlichen koaxial auf dem Verbinder 2. Die Scheibe 3 hat ein auf der Längsachse 5 liegendes Zentrum 25.

Der bevorzugt aus Metall bestehende Verbinder 2 weist einen sich koaxial zu der Längsachse 4 erstreckenden Verbinderschaft 6 mit einem freien vorderen Endbereich 7 und einem hinteren Endbereich 8 auf. An den hinteren Endbereich 8 schließt sich koaxial ein Verbinderkopf 12 des Verbinders 2 an. Der Verbinder 2 kann auch aus einem nichtmetallischen Material bestehen.

Bei den illustrierten Ausführungsbeispielen schließt der Verbinderkopf 12 den Verbinder 2 rückseitig ab. Es ist allerdings auch eine Bauform möglich, bei der der Verbinder 2 über zwei Verbinderschäfte 6 verfügt und der Verbinderkopf 12 axial zwischen den beiden Verbinderschäften 6 angeordnet ist.

Der Verbinderkopf 12 ist bevorzugt fest und insbesondere einstückig an dem Verbinderschaft 6 angebracht. Es ist aber auch eine Ausgestaltung möglich, bei der es sich um voneinander separate Teile handelt.

Der Verbinderschaft 6 ist im Bereich seines Außenumfanges mit einer Verbindungsstruktur 15 versehen, über die der Verbinder 2 mit einem nicht gezeigten Gegenstück verbindbar ist, insbesondere unter Ausbildung einer formschlüssigen Verbindung. Auf diese Weise ist die Verbindungseinheit 1 beispielsweise verwendbar, um zwei beliebige Bauteile oder Komponenten aneinander zu befestigen.

Der Außendurchmesser des Verbinderkopfes 12 ist größer als der Außendurchmesser des Verbinderschaftes 6 an zumindest dessen hinteren Endbereich 8. Somit wird der Verbinderschaft 6 von dem Verbinderkopf 12 ringsum radial überragt. Bevorzugt hat der Verbinderschaft 6 über seine gesamte Länge einen geringeren Außendurchmesser als der Verbinderkopf 12. Der Verbinderkopf 12 kann aber auch derart asymmetrisch an dem Verbinderschaft 6 angeordnet oder ausgebildet sein, dass er selbigen am Umfang nicht ringsum, sondern nur partiell, das heißt nur an einer oder mehreren Stellen, radial überragt, zum Beispiel nach Art eines Hakens.

Der Verbinder 2 ist bevorzugt als eine Schraube 2a ausgebildet, sodass es sich bei der Verbindungseinheit 1 um eine Schraubeinheit la handelt. Dies trifft auf die illustrierten Ausführungsbeispiele zu. Der Verbinderkopf 12 ist hierbei von einem einstückig mit dem Verbinderschaft 6 verbundenen Schraubenkopf 12a gebildet, und bei dem Verbinderschaft 6 handelt es sich um einen Schraubenschaft 6a, der als Verbindungsstruktur 15a ein Außengewinde 15a aufweist.

Bei einem nicht illustrierten Ausführungsbeispiel ist der Verbinder 2 ein Bajonettverbinder mit einer am Verbinderschaft 6 angeordneten Verbindungsstruktur 15, die als Bajonett-Verbindungsstruktur ausgebildet ist und beispielsweise aus einem oder mehreren radialen Vorsprüngen besteht. Bei einem ebenfalls nicht illustrierten Ausführungsbeispiel ist der Verbinder 2 ein Steckverbinder mit einer radial federelastischen Verbindungsstruktur 15. Ebenfalls nicht illustriert ist eine mögliche Ausgestaltung des Verbinders 2 als ein Schraubverbinder, bei dem der Verbinderschaft 6 eine Gewindestange und der Verbinderkopf 12 mindestens eine auf die Gewindestange aufgeschraubte Mutter ist.

Nachfolgend werden bevorzugte erfindungsgemäße Maßnahmen anhand von Verbindungseinheiten 1 beschrieben, die als Schraubeinheiten 1a ausgeführt sind, wobei die diesbezüglich erfolgenden Erläuterungen allerdings entsprechend für andere Bauformen von Verbindungseinheiten 1 gelten.

Exemplarisch hat ein als Schraubenkopf 12a ausgebildeter Verbinderkopf 12 eines als Schraube 2a ausgebildeten Verbinders 2 radial außen eine runde und insbesondere kreisrunde Außenkontur. Er ist beispielsweise kreiszylindrisch gestaltet. An seiner dem als Schraubenschaft 6a ausgebildeten Verbinderschaft 6 axial abgewandten Rückseite hat der Verbinderkopf 12 optional einen Werkzeugangriffsabschnitt 13, der von einer unkreisförmig und insbesondere mehreckig konturierten axialen Vertiefung des Verbinderkopfes 12 gebildet ist. An diesem Werkzeugangriffsabschnitt 13 lässt sich ein Schraubwerkzeug ansetzen, um den Verbinder 2 bei seinem bestimmungsgemäßen Gebrauch zum Einschrauben in ein komplementäres Innengewinde um seine Längsachse 4 zu verdrehen.

Bei einem nicht illustrierten Ausführungsbeispiel befindet sich der Werkzeugangriffsabschnitt 13 an der Außenfläche des Schraubenkopfes 12a. Selbiger ist dann an seinem radialen Außenumfang bevorzugt mehreckig und insbesondere viereckig oder sechseckig konturiert.

Der Verbinderkopf 12 verfügt nicht zwingend über einen Werkzeugangriffsabschnitt 13. Ob ein Werkzeugangriffsabschnitt 13 vorhanden ist und wie ein solcher Werkzeugangriffsabschnitt 13 gegebenenfalls ausgestaltet ist, hängt vom Anwendungsfall ab.

Der Verbinderkopf 12 kann beispielsweise auch kugelförmig ausgebildet sein.

An der dem Verbinderschaft 6 zugewandten Stirnseite hat der Verbinderkopf 12 eine vordere Stirnfläche 14, die sich insbesondere in einer zu der Längsachse 4 rechtwinkeligen Ebene erstreckt und die zweckmäßigerweise ringförmig gestaltet ist, sodass sie den Verbinderschaft 6 quasi umrahmt.

Der von dem Verbinderkopf 12 radial überragte, als Schraubenschaft 6a ausgebildete Verbinderschaft 6 hat wie schon erwähnt als Verbindungsstruktur 15 ein Außengewinde 15a. Der Gewindetyp ist beliebig. Beispielsweise handelt es sich um ein metrisches Gewinde. Der das Außengewinde 15a aufweisende Längenabschnitt des Verbinderschaftes 6 sei als Außengewindeabschnitt 16 bezeichnet.

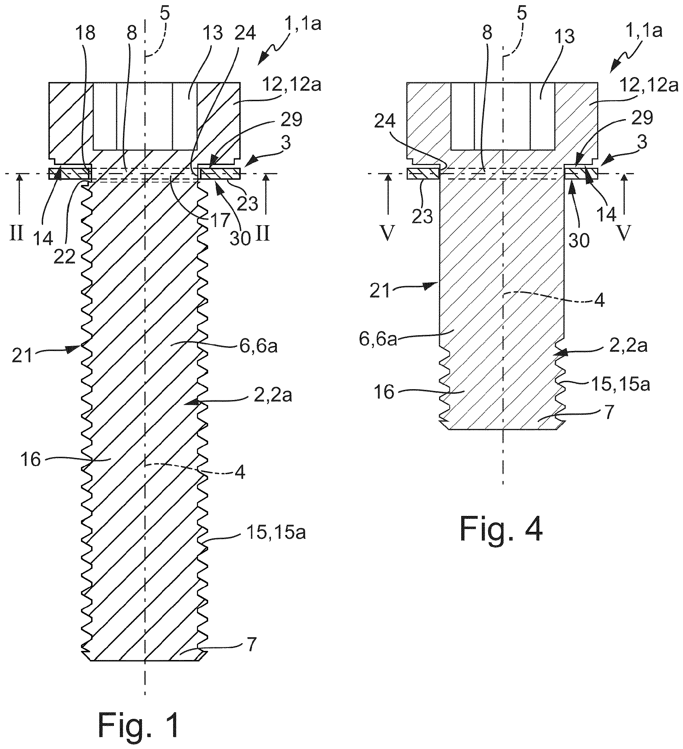

Bei den illustrierten Ausführungsbeispielen hat der Verbinderschaft 6 jeweils einen sich axial zwischen dem Außengewindeabschnitt 16 und dem Verbinderkopf 12 erstreckenden gewindelosen Schaftabschnitt 17. Dieser gewindelose Schaftabschnitt 17 kann gemäß Figur 1 relativ kurz sein, kann aber auch entsprechend Figur 4 eine relativ große axiale Länge haben. Beispielsweise hat der gewindelose Schaftabschnitt 17 entsprechend des Ausführungsbeispiels der Figur 1 einen geringeren Außendurchmesser als der Außengewindeabschnitt 16. Dadurch ergibt sich eine zu der Längsachse 4 koaxiale ringnutartige Vertiefung 18, die axial rückseitig von der vorderen Stirnfläche 14 des Verbinderkopfes 12 begrenzt ist und die axial gegenüberliegend von einer ringförmigen vorderen Vertiefungsflanke 22 begrenzt ist, die exemplarisch den Außengewindeabschnitt 16 rückseitig abschließt.

Die ringnutartige Vertiefung 18 kann beispielsweise spanend als Einstich in den Verbinderschaft 6 eingebracht sein. Sie kann aber beispielsweise auch eingewalzt sein oder bei einer Gießherstellung des Verbinders 2 unmittelbar eingeformt sein. Die ringnutartige Vertiefung 18 kann prinzipiell in jeder beliebigen Axialposition und mit jeder beliebigen axialen Länge in dem Verbinderschaft 6 ausgebildet sein.

Der Verbinderschaft 6 kann beispielsweise auch in der aus Figur 4 ersichtlichen Form gestaltet sein, wobei der Außendurchmesser des gewindelosen Schaftabschnittes 17 dem Außendurchmesser des Außengewindeabschnittes 16 entspricht. Hier liegt dann der vorderen Stirnfläche 14 des Verbinderkopfes 12 keine weitere Ringfläche analog der vorderen Vertiefungsflanke 22 des Ausführungsbeispiels der Figur 1 gegenüber.

Bei der Schraube 2 der Figur 4 ist das Außengewinde 15 zweckmäßigerweise spanend in den Schraubenschaft 6 eingebracht. Im Gegensatz dazu ist das Außengewinde 15 bei dem Ausführungsbeispiel der Figur 1 bevorzugt ein durch Materialumformung erzeugtes gerolltes Gewinde oder ein gepresstes Gewinde. Die Herstellungsart des Außengewindes 15 ist grundsätzlich beliebig wählbar.

Die auf dem Verbinderschaft 6 sitzende Scheibe 3 befindet sich zweckmäßigerweise entsprechend beider Ausführungsbeispiele auf dem gewindelosen Schaftabschnitt 17.

Wenn sich das Außengewinde 15 unmittelbar bis hin zu dem Verbinderkopf 12 erstreckt und kein gewindeloser Schaftabschnitt zwischen dem Außengewinde 15 und dem Verbinderkopf 12 vorhanden ist, sitzt die Scheibe 3 zweckmäßigerweise unmittelbar auf dem Außengewinde 15.

Die Scheibe 3 fungiert insbesondere als Unterlegscheibe und/oder als Dichtscheibe. Als Unterlegscheibe wird sie beispielsweise verwendet, wenn mittels des Verbinders 2 eine Befestigungsmaßnahme vorgenommen wird, um zum Beispiel zwei Bauteile oder Komponenten miteinander zu verschrauben oder auf sonstige Weise miteinander zu verbinden. Als Dichtscheibe fungiert die Scheibe 3 beispielsweise in Fällen, in denen die Schraube 2a als Verschlussschraube eingesetzt wird, beispielsweise als Ölablassschraube bei einer Maschine oder bei einem Fahrzeug.

Die Scheibe 3 hat einen ringförmigen Scheibenkörper 23, der ein axial durchgehendes Durchgangsloch 24 der Scheibe 3 umrahmt. Der Scheibenkörper 23 besteht aus einem Material, das über duktile Eigenschaften verfügt, sodass er sich unter Aufbringung von Verformungskräften dauerhaft plastisch umformen lässt. Bevorzugt besteht er aus Metall, jedoch kann er beispielsweise auch aus Kunststoff bestehen. Es kann sich bei dem Scheibenkörper 23 ohne weiteres um einen Mehrkomponenten-Körper handeln.

Abhängig vom Verwendungszweck der Scheibe 3 besteht der Scheibenkörper 23 beispielsweise aus Stahl oder aus einem Kupfermaterial. Insbesondere im Zusammenhang mit einer Abdichtfunktion kann der Scheibenkörper 23 der Scheibe 3 zusätzlich mit mindestens einem anderen Material kombiniert sein, insbesondere mit Kunststoff und hierbei insbesondere mit einem Elastomermaterial.

Der im Folgenden zur Vereinfachung auch nur noch als Scheibenkörper 23 bezeichnete ringförmige Scheibenkörper 23 hat eine dem Zentrum 25 der Scheibe 3 zugewandte, ringförmig in sich geschlossene Innenumfangsfläche 26. Die Innenumfangsfläche 26 bildet die radial periphere Begrenzung des Durchgangsloches 24. Der Scheibenkörper 23 hat außerdem eine von dem Zentrum 25 radial wegweisende, ringförmig in sich geschlossene Außenumfangsfläche 27. Die Innenumfangsfläche 26 definiert eine Innenkontur 33 des Scheibenkörpers 23. Die Außenumfangsfläche 27 definiert eine Außenkontur 34 des Scheibenkörpers 27.

Der Scheibenkörper 23 hat ferner zwei einander axial entgegengesetzte ringförmige Stirnflächen 29, 30. Eine hintere Stirnfläche 29 dieser Stirnflächen 29, 30 ist dem Verbinderkopf 12 zugewandt. Jede Stirnfläche 29, 30 erstreckt sich zwischen der Innenumfangsfläche 26 und der Außenumfangsfläche 27. Beide Stirnflächen 29, 30 erstrecken sich zweckmäßigerweise in einer zu der Längsachse 5 rechtwinkeligen Ebene. Sie können allerdings auch konisch geneigt sein.

Das Durchgangsloch 24 hat eine durch einen Doppelpfeil angedeutete Umfangsrichtung 28. Die Umfangsrichtung 28 verläuft rings um das Zentrum 25 beziehungsweise um die Längsachse 5 herum. Der Scheibenkörper 23 hat eine Umfangsrichtung 32, die auch um das Zentrum 25 beziehungsweise um die Längsachse 5 herum verläuft.

Aufgrund einer im Folgenden näher beschriebenen, von einer Kreisform abweichenden Innenkontur 33 des Scheibenkörpers 23 ist die auf dem Verbinderschaft 6 sitzende Scheibe 3 durch Zusammenwirken des Scheibenkörpers 23 mit dem Verbinderschaft 6 axial unverlierbar auf dem Verbinderschaft 6 gehalten. Somit kann die Scheibe 3 ungeachtet eventueller Bewegungen oder Erschütterungen der Schraube 2 nicht von dem Verbinderschaft 6 herunterfallen. Daraus resultiert die nur einheitlich handhabbare Schraubeinheit 1.

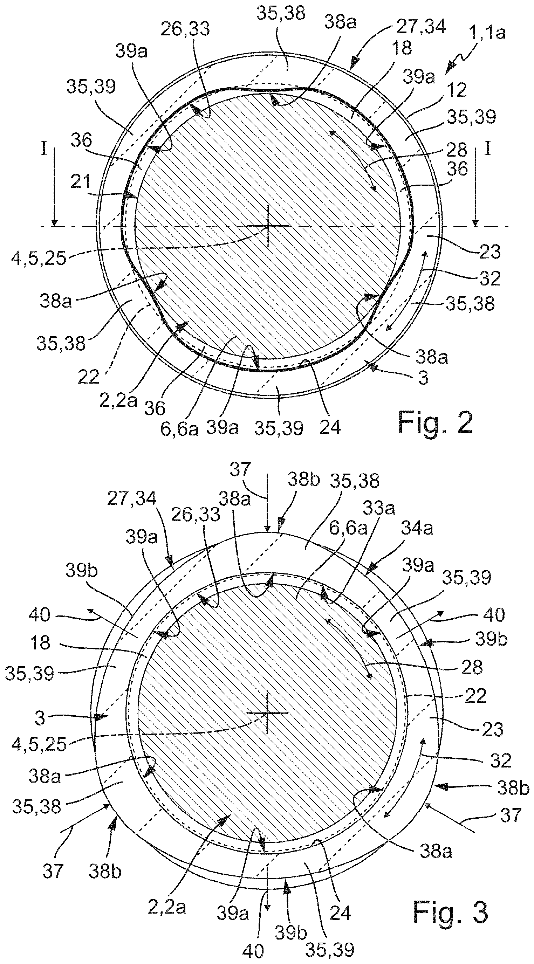

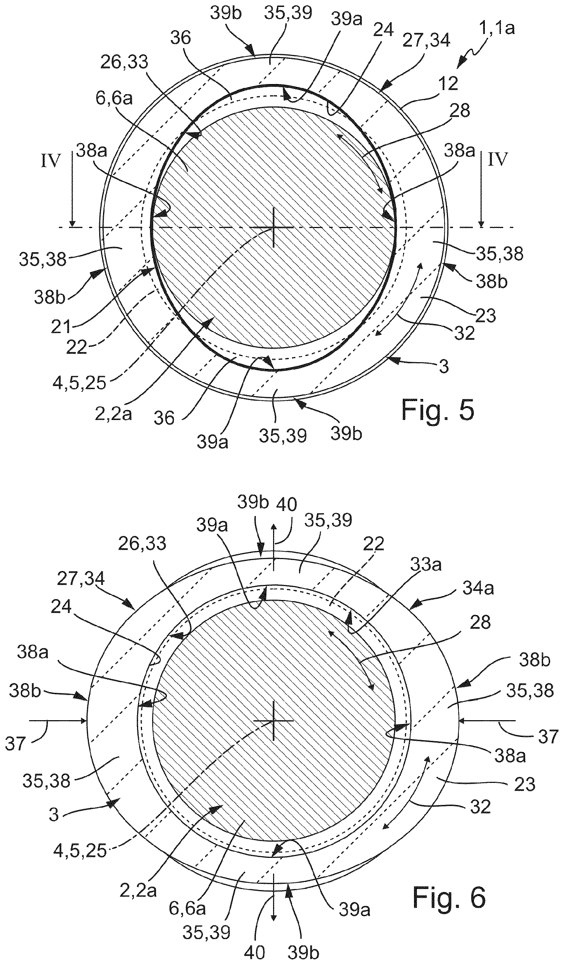

Der ringförmige Scheibenkörper 23 ist ein Umformteil und hat seine Innenkontur 33 und Außenkontur 34 als endgültige Konturen dadurch erhalten, dass der Scheibenkörper 23 eine gezielte plastische Umformung erfahren hat. Die Figuren 3 und 6 zeigen den Scheibenkörper 23 vor der plastischen Umformung, wobei man den in dieser unverformten Gestaltung vorliegenden Scheibenkörper 23 auch als Scheibenkörper-Rohling bezeichnen kann.

Bei der erfindungsgemäß hergestellten Schraubeinheit 1 repräsentieren die Innenkontur 33 eine endgültige Innenkontur 33 und die Außenkontur 34 eine endgültige Außenkontur 34 des Scheibenkörpers 23. Vor der plastischen Umformung hat der Scheibenkörper 23 beziehungsweise der Scheibenkörper-Rohling eine nur vorläufige Innenkontur 33a und eine nur vorläufige Außenkontur 34a. Die bei der Umformung gezielt herbeigeführte Gestaltänderung des Scheibenkörpers 23 führt dazu, dass die vorläufige Innenkontur 33a in die abweichend davon gestaltete endgültige Innenkontur 33 umgeformt wird und dass gleichzeitig die vorläufige Außenkontur 34a in die abweichend davon gestaltete endgültige Außenkontur 34 umgeformt wird.

Vor der plastischen Umformung wird der Scheibenkörper 23 in gelochter Form mit der vorläufigen Innenkontur 33a und der vorläufigen Außenkontur 34a bereitgestellt. Der noch unverformte Scheibenkörper 23 wird zweckmäßigerweise als Stanzteil gefertigt. Alternativ kann der Scheibenkörper 23 beispielsweise auch durch Gießen oder Spritzgießen oder durch spanende Bearbeitung, zum Beispiel durch Fräsen, gefertigt werden.

Der Umformvorgang findet im auf dem Verbinderschaft 6 aufgesteckten Zustand der Scheibe 3 bzw. des Scheibenkörpers 23 statt. Der Scheibenkörper 23 wird hierbei insbesondere dort auf dem Verbinderschaft 6 positioniert, wo er sich auch nach dem Umformvorgang befinden soll.

Die vorläufige Innenkontur 33a ist so gestaltet, dass das Durchgangsloch 24 eine ausreichend große Querschnittsfläche hat, um das ungehinderte Hindurchstecken des Verbinderschaftes 6 zu ermöglichen.

Die plastische Umformung des Scheibenkörpers 23 wird dadurch vorgenommen, dass in die die vorläufige Außenkontur 34a aufweisende Außenumfangsfläche 27 bezüglich des Zentrums 25 radial orientierte Verformungskräfte 37 in den Scheibenkörper 23 eingeleitet werden. Dies ist in den Figuren 3 und 6 schematisch durch Pfeile illustriert. Die Verformungskräfte 37 werden bevorzugt maschinell erzeugt.

Die vorläufige Außenkontur 34a weicht von einer Kreisform ab. Die unverformte Außenumfangsfläche 27 ist also mit anderen Worten unkreisförmig konturiert. Bei der plastischen Umformung des Scheibenkörpers 23 wird gleichzeitig sowohl die Ringkontur der Außenumfangsfläche 27 als auch die Ringkontur der Innenumfangsfläche 26 dauerhaft verändert.

Allen illustrierten Ausführungsbeispielen ist gemeinsam, dass die plastische Umformung des Scheibenkörpers 23 so ausgeführt wird, dass die daraus resultierende endgültige Außenkontur 34 zumindest im Wesentlichen und zweckmäßigerweise exakt eine Kreisform hat. Daraus resultiert eine optimale Symmetrie bezüglich des Verbinderkopfes 12 und dementsprechend eine gleichförmige Einleitung axialer Andrückkräfte, wenn die Schraube 2 bei der bestimmungsgemäßen Anwendung der Verbindungseinheit 1 befestigt wird.

Grundsätzlich kann die endgültige Außenkontur 33 auch eine beliebige andere, von der vorläufigen Außenkontur 34a abweichende endgültige Außenkontur 34 haben.

Bevorzugt hat der plastisch umgeformte Scheibenkörper 23 eine derartige endgültige Innenkontur 33, dass die Innenumfangsfläche 26 über in der Umfangsrichtung 28 des Durchgangsloches 24 abwechseln aufeinanderfolgende Flächenabschnitte unterschiedlich großen radialen Abstandes zum Zentrum 25 der Scheibe verfügt. Dies gilt für beide illustrierten Ausführungsbeispiele.

Der Scheibenkörper 23 kann gedanklich in mehrere in seiner Umfangsrichtung 32 aufeinanderfolgende und unmittelbar materialeinheitlich ineinander übergehende Ringsegmente 35 unterteilt werden. Eine körperliche Trennung zwischen diesen Ringsegmenten 35 liegt nicht vor. Allerdings gibt es bevorzugt zwei Arten abweichend voneinander konturierter Ringsegmente 35, die zur besseren Unterscheidung als Haupt-Ringsegmente 38 und als Übergangs-Ringsegmente 39 bezeichnet seien. Die Innenumfangsfläche 26 setzt sich zusammen aus an den Haupt-Ringsegmenten 38 ausgebildeten Flächenabschnitten und aus an den Übergangs-Ringsegmenten 39 ausgebildeten Flächenabschnitten, die zur besseren Unterscheidung als Haupt-Innenflächenabschnitte 38a und als Übergangs-Innenflächenabschnitte 39a bezeichnet werden. In der Umfangsrichtung 32 liegt eine abwechselnde Aufeinanderfolge von Haupt-Innenflächenabschnitten 38a und Übergangs-Innenflächenabschnitt 39a vor, die jeweils unmittelbar und bevorzugt abstufungslos ineinander übergehen.

Bei dem Ausführungsbeispiel der Figuren 1 und 2 hat der Scheibenkörper 23 drei Haupt-Ringsegmente 38 und drei Übergangs-Ringsegmente 39, während der Scheibenkörper 23 bei dem Ausführungsbeispiel der Figuren 4 und 5 jeweils nur zwei Haupt-Ringsegmente 38 und Übergangs-Ringsegmente 39 aufweist. Während sich letztere paarweise diametral gegenüberliegen, ergibt sich bei dem Ausführungsbeispiel der Figuren 1 und 2 ein winkelmäßiger Versatz innerhalb der Haupt-Ringsegmente 38 und der Übergangs-Ringsegmente 39 um etwa 120 Grad.

Die Haupt-Innenflächenabschnitte 38a haben einen geringeren Abstand zu dem Zentrum 25 als die Übergangs-Innenflächenabschnitte 39a.

Gemäß dem Ausführungsbeispiel der Figuren 1 und 2 kann der umgeformte Scheibenkörper 23 eine derart gestaltete endgültige Innenkontur 33 haben, dass sich konkav und konvex gekrümmte bogenförmige Flächenabschnitte der Innenumfangsfläche in der Umfangsrichtung 32 abwechseln. Bei dem illustrierten bevorzugten Ausführungsbeispiel sind die Haupt-Innenflächenabschnitte 38a konvex in Richtung zum Zentrum 25 ausgebaucht, während die Übergangs-Innenflächenabschnitte 39a eine konvexe Bogenform haben.

Hiervon abweichend kann die endgültige Innenkontur 33 insbsondere auch so geformt sein oder werden, dass sie in der Umfangsrichtung 32 durchweg konkav gekrümmt ist, wobei sich allerdings Flächenabschnitte unterschiedlich starker Krümmung abwechseln. Eine solche Ausgestaltung ist bei dem Ausführungsbeispiel der Figuren 4 und 5 umgesetzt, und zwar derart, dass die endgültige Innenkontur 33 oval oder elliptisch gestaltet ist. Beispielhaft haben die beiden Übergangs-Innenflächenabschnitte 39a eine stärkere Krümmung als die Haupt-Innenflächenabschnitte 38a.

Den illustrierten Ausführungsbeispielen ist gemeinsam, dass die endgültige Außenkontur 34 und die endgültige Innenkontur 33 des ringförmigen Scheibenkörpers 23 so geformt sind, dass sich in der Umfangsrichtung 28, 32 abwechseln aufeinanderfolgende Ringsegmente 35 mit voneinander abweichender radialer Dicke ergeben. Die radiale Dicke ist gemessen in der bezüglich der Längsachse 5 radialen Richtung. Beispielhaft ist die maximale radiale Dicke bei den Haupt-Ringsegmenten 38 größer als bei den Übergangs-Ringsegmenten 39. Bevorzugt ergibt sich in der Umfangsrichtung 32 ein fließender Übergang zwischen den die unterschiedliche maximale radiale Dicke aufweisenden Ringsegmenten 35, 38, 39.

Den beiden illustrierten Ausführungsbeispielen des Herstellungsverfahrens ist gemeinsam, dass der Scheibenkörper 23 vor seiner plastischen Umformung eine runde vorläufige Innenkontur 33a hat, wobei es sich bevorzugt gemäß Figuren 3 und 6 um eine zumindest im Wesentlichen und insbesondere genau kreisförmige vorläufige Innenkontur 33a handelt.

Diese runde und bevorzugt kreisrunde vorläufige Innenkontur 33a ist zweckmäßigerweise mit einer vorläufigen Außenkontur 34a kombiniert, die in der Umfangsrichtung 32 des Scheibenkörpers 23 ringsum konvex gekrümmt ist, wobei sich in der Umfangsrichtung 28, 32 Flächenabschnitte unterschiedlich starker Krümmung der Außenumfangsfläche 27 abwechselt.

Bei dem Ausführungsbeispiel der Figuren 1 bis 3 ist die vorläufige Außenkontur 34a mehreckig gestaltet, gleichwohl aber ringsum konvex abgerundet. Beispielhaft ist eine dreieckige Grundform der vorläufigen Außenkontur 34a vorgesehen. Besonders vorteilhaft ist hierbei eine sogenannte trilobulare Konturierung, die in Figur 3 illustriert ist.

Bei dem Ausführungsbeispiel der Figuren 4 bis 6 wird der Scheibenkörper 23 zur Durchführung des Umformvorganges mit einer ovalen oder elliptischen vorläufigen Außenkontur 34a bereitgestellt.

Bei beiden Ausführungsbeispielen ist die jeweils beschriebene vorläufige Außenkontur 34a bevorzugt mit einer kreisrunden vorläufigen Innenkontur 33a kombiniert.

Der Scheibenkörper 23 hat bevorzugt schon vor der plastischen Umformung, also auch schon als Scheibenkörper-Rohling, die anhand des umgeformten Scheibenkörpers 23 weiter oben beschriebene Unterteilung in aufeinanderfolgend angeordnete und einstückig ineinander übergehende Haupt-Ringsegmente 38 und Übergangs-Ringsegmente 39. Diese Haupt-Ringsegmente 38 und Übergangs-Ringsegmente 39 unterscheiden sich jedoch in der Konturierung von denjenigen des plastisch umgeformten Scheibenkörpers 23.

Bei dem Ausführungsbeispiel der Figur 3 sind die Eckbereiche der mehreckigen vorläufigen Außenkontur 34a von den an den Haupt-Ringsegmenten 38 ausgebildeten Flächenabschnitten der Außenumfangsfläche 27 gebildet, die zur besseren Unterscheidung als Haupt-Außenflächenabschnitte 38b bezeichnet werden. An den die Haupt-Ringsegmente 38 paarweise miteinander verbindenden Übergangs-Ringsegmenten 39 befinden sich als Übergangs-Außenflächenabschnitte 39b bezeichnete Flächenabschnitte der Außenumfangsfläche 27.

Bei dem Ausführungsbeispiel der Figuren 4 bis 6 ist die Außenumfangsfläche 27 ebenfalls in an den Haupt-Ringsegmenten 38 ausgebildete Haupt-Außenflächenabschnitte 38b und an den Übergangs-Ringsegmenten 39 ausgebildete Übergangs-Außenflächenabschnitte 39b unterteilt.

Wie bei dem umgeformten Scheibenkörper 23 haben zweckmäßigerweise auch bei dem noch nicht umgeformten Scheibenkörper 23 die Haupt-Ringsegmente 38 eine größere maximale radiale Dicke als die Übergangs-Ringsegmente 39.

Die Verformungskräfte 37 werden zweckmäßigerweise gleichzeitig an sämtlichen Haupt-Ringsegmenten 38 in die daran ausgebildeten Haupt-Außenflächenabschnitte 38b zu dem Zentrum 25 hin gerichtet eingeleitet, wie dies in den Figuren 3 und 6 angedeutet ist. Dies hat den Effekt, dass nach der Umformung die abwechselnde Aufeinanderfolge der Haupt-Ringsegmente 38 und der Übergangs-Ringsegmente 39 weiterhin gegeben ist, wobei nun allerdings die Haupt-Innenflächenabschnitte 38a und die Haupt-Außenflächenabschnitte 38b einen geringeren Abstand zum Zentrum 25 der Scheibe 3 haben als vor der plastischen Umformung.

Bei der Umformung werden die Haupt-Ringsegmente 38 radial nach innen gedrückt. Die Übergangs-Ringsegmente 39 behalten dabei ihre radiale Relativlage zum Verbinderschaft 6 bei oder werden gemäß den Pfeilen 40 zumindest geringfügig nach radial außen verformt. Nach der Umformung kann der radiale Abstand zwischen den Übergangs-Innenflächenabschnitten 39a und der Außenumfangsfläche 21 des Verbinderschaftes 6 verglichen mit dem Zustand vor der Umformung insbesondere konstant oder größer sein.

Für die plastische Umformung werden geeignete Umformwerkzeuge eingesetzt. Geeignet ist beispielsweise eine hydraulisch oder mechanisch betätigte Spannzange oder ein Umform-Rohrkörper, der über einen sich konisch verjüngenden Rohrkanal verfügt, durch den der Verbinder 2 mit darauf sitzender Scheibe 3 axial hindurchgedrückt wird.

Wie schon erwähnt, erfolgt die plastische Materialumformung des Scheibenkörpers 23 im auf den Verbinderschaft 6 aufgesteckten Zustand.

Zur Herstellung einer Schraubeinheit 1 gemäß Figuren 1 bis 3 wird der einen Scheibenkörper-Rohling bildende Scheibenkörper 23 vor seiner radialen Verformung auf axialer Höhe der ringnutartigen Vertiefung 18 des Verbinderschaftes 6 platziert, sodass die radiale Verformung zur Folge hat, dass der Scheibenkörper 23 mit den Haupt-Ringsegmenten 38 radial in die ringnutartige Vertiefung 18 hineingedrückt wird.

Die Verformung des duktilen Werkstoffes des Scheibenkörpers 23 kann so weit gehen, dass die Haupt-Innenflächenabschnitte 38a unter Vorspannung innerhalb der ringnutartigen Vertiefung 18 an der radialen Außenumfangsfläche 21 des Verbinderschaftes 6 anliegen und der Scheibenkörper 23 folglich im Presssitz, das heißt kraftschlüssig verliersicher gehalten ist. Aber auch bei einer etwas geringeren Verformung, die keinen Presssitz hervorruft, gleichwohl jedoch ein Eintauchen in der Haupt-Ringsegmente 38 in die ringnutartige Vertiefung 18 zur Folge hat, ergibt sich eine Verliersicherung des Scheibenkörpers 23, weil letzterer die vordere Vertiefungsflanke 22 nicht überwinden kann. Die Scheibe 3 sitzt dann lose aber dennoch verliergesichert auf dem Verbinderschaft 6.

Zur Herstellung einer Verbindungseinheit 1 gemäß Figuren 4 bis 6 wird der als Scheibenkörper-Rohling vorliegende Scheibenkörper 23 durch die radialen Verformungskräfte 37 so stark radial verformt, dass er mit den Haupt-Ringsegmenten 38 im Presssitz auf den Verbinderschaft 6 fixiert ist. Einer zusätzlichen, axial formschlüssigen Fixierung bedarf es hierbei nicht.

In den Figuren 2 uns 5 sind Zwischenräume 36 ersichtlich, die im Bereich der Scheibe 3 zwischen der radialen Außenumfangsfläche 21 des Verbinderschaftes 6 und der Innenumfangsfläche 26 des Scheibenkörpers 23 vorliegen. Sie befinden sich insbesondere radial zwischen den Übergangs-Ringsegmenten 38 und dem Verbinderschaft 6. Es ist gut zu erkennen, dass die bezüglich der Längsachse 4 der Schraube 2 radial gemessene maximale Breite dieser Zwischenräume 36 erheblich geringer ist als die entsprechend gemessene radiale Breite der ringförmigen vorderen Stirnfläche 14 des Verbinderkopfes 12. Damit ist sichergestellt, dass der Verbinderkopf 12 bei bestimmungsgemäßer Verwendung der Schraubeinheit 1 mit seiner vorderen Stirnfläche 14 ringsum an dem Scheibenkörper 23 anliegt, sodass eine komplette Auflage in Verbindung mit einer zuverlässigen Dichtwirkung gewährleistet ist.

## Patentansprüche

1. Verfahren zur Herstellung einer Verbindungseinheit (1), wobei die Verbindungseinheit (1) über einen Verbinder (2) mit einem eine Verbindungsstruktur (15) aufweisenden Verbinderschaft (6) und einem an dem Verbinderschaft (6) angeordneten, den Verbinderschaft (6) radial überragenden Verbinderkopf (12) verfügt, und wobei die Verbindungseinheit (1) außerdem über eine ringförmige Scheibe (3) verfügt, die einen plastisch verformbaren ringförmigen Scheibenkörper (23) und ein von dem ringförmigen Scheibenkörper (23) umrahmtes, von dem Verbinderschaft (6) durchsetztes Durchgangsloch (24) aufweist, wobei der ringförmige Scheibenkörper (23) eine eine Außenkontur (34) des Scheibenkörpers (23) definierende Außenumfangsfläche (27) und eine das Durchgangsloch (24) peripher begrenzende, eine Innenkontur (33) des Scheibenkörpers (23) definierende Innenumfangsfläche (26) hat, wobei zur verliersicheren Fixierung der auf dem Verbinderschaft (6) sitzenden Scheibe (3) die Innenkontur (33) des Scheibenkörpers (23) im auf dem Verbinderschaft (6) sitzenden Zustand der Scheibe (3) ausgehend von einer das vorherige Aufstecken der Scheibe (3) auf den Verbinderschaft (6) ermöglichenden vorläufigen Innenkontur (33a) durch plastische Umformung des Scheibenkörpers (23) in eine ein unverlierbares Festhalten der Scheibe (3) auf dem Verbinderschaft (6) bewirkende, von der vorläufigen Innenkontur (33a) abweichende endgültige Innenkontur (33) umgeformt wird,
**dadurch gekennzeichnet,**
- **dass** der ringförmige Scheibenkörper (23) vor seiner plastischen Umformung mit einer von einer Kreisform abweichenden vorläufigen Außenkontur (34a) bereitgestellt und auf den Verbinderschaft (6) aufgesteckt wird,
- und **dass** die die endgültige Innenkontur (33) des ringförmigen Scheibenkörpers (23) herbeiführende plastische Umformung des ringförmigen Scheibenkörpers (23) durchgeführt wird, indem radiale Verformungskräfte (37) in die die vorläufige Außenkontur (34a) aufweisende Außenumfangsfläche (27) des auf dem Verbinderschaft (6) sitzenden Scheibenkörpers (23) eingeleitet werden,
- wobei die plastische Umformung des ringförmigen Scheibenkörpers (23) so ausgeführt wird, dass die endgültige Innenkontur (33) des ringförmigen Scheibenkörpers (23) von einer Kreisform abweicht und gleichzeitig auch eine von der vorläufigen Außenkontur (34a) abweichende, zumindest im Wesentlichen kreisförmige endgültige Außenkontur (34) des Scheibenkörpers (23) geformt wird.

2. Verfahren nach Anspruch 1, **dadurch gekennzeichnet, dass** die plastische Umformung des ringförmigen Scheibenkörpers (23) so ausgeführt wird, dass die die endgültige Innenkontur (33) definierende Innenumfangsfläche (26) über in der Umfangsrichtung (28) des Durchgangsloches (24) abwechselnd aufeinanderfolgende Flächenabschnitte (38a, 39a) unterschiedlich großen radialen Abstandes zum Zentrum (25) der Scheibe (3) verfügt.

3. Verfahren nach Anspruch 1 oder 2, **dadurch gekennzeichnet, dass** die plastische Umformung des ringförmigen Scheibenkörpers (23) so ausgeführt wird, dass die die endgültige Innenkontur (33) definierende Innenumfangsfläche (26) über in der Umfangsrichtung (28) des Durchgangsloches (24) abwechselnd aufeinanderfolgende konkav gekrümmte und konvex gekrümmte Flächenabschnitte (38a, 39a) verfügt, oder dass die plastische Umformung des ringförmigen Scheibenkörpers (23) so ausgeführt wird, dass die endgültige Innenkontur (33) durchweg konkav gekrümmt ist, wobei sich in der Umfangsrichtung (28) des Durchgangsloches (24) Flächenabschnitte (38a, 39a) der Innenumfangsfläche (26) unterschiedlich starker Krümmung abwechseln.

4. Verfahren nach einem der Ansprüche 1 bis 3, **dadurch gekennzeichnet, dass** der ringförmige Scheibenkörper (23) vor seiner plastischen Umformung mit einer runden vorläufigen Innenkontur (33a) bereitgestellt und auf den Verbinderschaft (6) aufgesteckt wird, wobei die vorläufige Innenkontur (33a) zweckmäßigerweise zumindest im Wesentlichen kreisförmig gestaltet ist, und/oder dass der ringförmige Scheibenkörper (23) vor seiner plastischen Umformung mit einer ringsum konvex gekrümmten vorläufigen Außenkontur (34a) bereitgestellt wird, wobei sich in der Umfangsrichtung (28) des Durchgangsloches (24) Flächenabschnitte (38b, 39b) der Außenumfangsfläche (27) unterschiedlich starker Krümmung abwechseln.

5. Verfahren nach einem der Ansprüche 1 bis 4, **dadurch gekennzeichnet, dass** der ringförmige Scheibenkörper (23) vor seiner plastischen Umformung mit einer mehreckigen vorläufigen Außenkontur (34a) bereitgestellt wird, die zweckmäßigerweise ringsum konvex abgerundet ist.

6. Verfahren nach einem der Ansprüche 1 bis 5, **dadurch gekennzeichnet, dass** der ringförmige Scheibenkörper (23) vor seiner plastischen Umformung mit einer trilobularen vorläufigen Außenkontur (34a) bereitgestellt und auf den Verbinderschaft (6) aufgesteckt wird, und/oder dass der ringförmige Scheibenkörper (23) vor seiner plastischen Umformung mit einer ovalen oder elliptischen vorläufigen Außenkontur (34a) bereitgestellt und auf den Verbinderschaft (6) aufgesteckt wird.

7. Verfahren nach einem der Ansprüche 1 bis 6, **dadurch gekennzeichnet, dass** der ringförmige Scheibenkörper (23) vor seiner plastischen Umformung mit einer derartigen vorläufigen Außenkontur (34a) und vorläufigen Innenkontur (33a) bereitgestellt wird, dass er in der Umfangsrichtung (28) des Durchgangsloches (24) abwechselnd aufeinanderfolgende Ringsegmente (35, 38, 39) mit voneinander abweichender radialer Dicke hat, sodass sich Ringsegmente minimaler radialer Dicke (35, 39) mit Ringsegmenten maximaler radialer Dicke (35, 38) in der Umfangsrichtung (28) des Durchgangsloches (24) abwechseln, wobei die plastische Umformung des ringförmigen Scheibenkörpers (23) so ausgeführt wird, dass der Scheibenkörper (23) nach der plastischen Umformung weiterhin über in der Umfangsrichtung (28) des Durchgangsloches (24) abwechselnd aufeinanderfolgende Ringsegmente minimaler radialer Dicke (35, 39) und Ringsegmente maximaler radialer Dicke (35, 38) verfügt, wobei die an den Ringsegmenten (35, 38) maximaler radialer Dicke ausgebildeten Flächenabschnitte (38a, 39a) der Innenumfangsfläche (26) und der Außenumfangsfläche (27) nach der plastischen Umformung einen geringeren Abstand zum Zentrum (25) der Scheibe (3) haben als vor der plastischen Umformung.

8. Verfahren nach einem der Ansprüche 1 bis 7, **dadurch gekennzeichnet, dass** der ringförmige Scheibenkörper (23) bei seiner plastischen Umformung derart radial auf den Verbinderschaft (6) aufgepresst wird, dass er an seiner Innenumfangsfläche (26) mit radialem Presssitz auf dem Verbinderschaft (6) fixiert ist, und/oder dass der Verbinderschaft (6) vor dem Aufstecken der unverlierbar zu fixierenden Scheibe (3) mit einer ringnutartigen Vertiefung (18) bereitgestellt wird, die von einer dem Verbinderkopf (12) zugewandten vorderen Vertiefungsflanke (22) begrenzt ist, wobei die Scheibe (3) vor der plastischen Umformung des Scheibenkörpers (23) so auf den Verbinderschaft (6) aufgesteckt wird, dass sie axial auf Höhe der ringnutartigen Vertiefung (18) zu liegen kommt, wobei die anschließende plastische Umformung des Scheibenkörpers (23) derart erfolgt, dass die Innenumfangsfläche (26) des Scheibenkörpers (23) zumindest partiell in die ringnutartige Vertiefung (18) eintaucht.

9. Verfahren nach einem der Ansprüche 1 bis 8, **dadurch gekennzeichnet, dass** der Scheibenkörper (23) der Scheibe (3) mit seiner vorläufigen Innenkontur (33a) und seiner vorläufigen Außenkontur (34a) als Stanzteil gefertigt wird, und/oder dass die Verbindungseinheit (1) als Schraubeinheit (1a) hergestellt wird, wobei der Verbinder (2) als Schraube (2a) ausgebildet wird und der Verbinderschaft (6) mit einer als Außengewinde (15a) ausgebildeten Verbindungsstruktur (15) versehen wird.

10. Verbindungseinheit, mit einem Verbinder (2), der einen mit einer Verbindungsstruktur (15) versehenen Verbinderschaft (6) und einen an dem Verbinderschaft (6) angeordneten Verbinderkopf (12) aufweist, wobei der Verbinderkopf (12) den Verbinderschaft (6) radial überragt, und mit einer ringförmigen Scheibe (3), die einen aus einem plastisch verformbaren Material bestehenden ringförmigen Scheibenkörper (23) aufweist, der ein von dem Verbinderschaft (6) durchsetztes Durchgangsloch (24) umrahmt, das peripher von einer Innenumfangsfläche (26) des Scheibenkörpers (23) begrenzt ist, die eine durch plastische Materialumformung des Scheibenkörpers (23) erzeugte Innenkontur (33) des Scheibenkörpers (23) definiert, wobei diese Innenkontur (23) so gestaltet ist, dass die Scheibe (3) durch Zusammenwirken mit dem Verbinderschaft (6) unverlierbar auf dem Verbinderschaft (6) gehalten ist, und wobei der ringförmige Scheibenkörper (23) eine eine Außenkontur (34) des Scheibenkörpers (23) definierende Außenumfangsfläche (27) hat,
**dadurch gekennzeichnet,**
- **dass** der ringförmige Scheibenkörper (23) als ein Umformteil ausgebildet ist, wobei die Innenkontur (33) auf einer radialen plastischen Umformung des in gelochter Form bereitgestellten Scheibenkörpers (23) beruht, die durch Einleitung radialer Verformungskräfte (37) in die Außenumfangsfläche (27) des Scheibenkörpers (23) hervorgerufen wurde,
- **dass** die Außenkontur (34) des ringförmigen Scheibenkörpers (23) zumindest im Wesentlichen kreisförmig gestaltet ist,
- und **dass** die Innenkontur (33) des ringförmigen Scheibenkörpers (23) unkreisförmig gestaltet ist.

11. Verbindungseinheit nach Anspruch 10, **dadurch gekennzeichnet, dass** die die Innenkontur (33) definierende Innenumfangsfläche (26) des ringförmigen Scheibenkörpers (23) über in der Umfangsrichtung (28) des Durchgangsloches (24) abwechselnd aufeinanderfolgende Flächenabschnitte (38a, 39a) unterschiedlich großen radialen Abstandes zum Zentrum (25) der Scheibe verfügt.

12. Verbindungseinheit nach Anspruch 10 oder 11, **dadurch gekennzeichnet, dass** die Innenkontur (33) des ringförmigen Scheibenkörpers (23) in der Umfangsrichtung (28) des Durchgangsloches (24) durchweg konkav gekrümmt ist, wobei sich in der Umfangsrichtung (28) des Durchgangsloches (24) Flächenabschnitte (38a, 39a) der Innenumfangsfläche (26) unterschiedlich starker Krümmung abwechseln, und/oder dass die Innenkontur (33) des ringförmigen Scheibenkörpers (23) oval oder elliptisch gestaltet ist.

13. Verbindungseinheit nach einem der Ansprüche 10 oder 11, **dadurch gekennzeichnet, dass** die die Innenkontur (33) definierende Innenumfangsfläche (26) des ringförmigen Scheibenkörpers (23) über in der Umfangsrichtung (28) des Durchgangsloches (24) abwechselnd aufeinanderfolgende konkav gekrümmte und konvex gekrümmte Flächenabschnitte (38a, 39a) verfügt.

14. Verbindungseinheit nach einem der Ansprüche 10 bis 13, **dadurch gekennzeichnet, dass** die Außenkontur (43) und die Innenkontur (33) des ringförmigen Scheibenkörpers (23) derart geformt sind, dass der ringförmige Scheibenkörper (23) über in der Umfangsrichtung (28) des Durchgangsloches (24) abwechselnd aufeinanderfolgende Ringsegmente (35, 38, 39) mit voneinander abweichender radialer Dicke verfügt, sodass sich Ringsegmente minimaler radialer Dicke (35, 39) mit Ringsegmenten maximaler radialer Dicke (35, 38) in der Umfangsrichtung (28) des Durchgangsloches (24) abwechseln, wobei die an den Ringsegmenten maximaler radialer Dicke (35, 38) ausgebildeten Flächenabschnitte (38a, 39a) der Innenumfangsfläche (26) einen geringeren radialen Abstand zum Zentrum (25) der Scheibe (3) haben als die Ringsegmente (35, 39) minimaler radialer Dicke.

15. Verbindungseinheit nach einem der Ansprüche 10 bis 14, **dadurch gekennzeichnet, dass** die Verbindungseinheit (1) eine Schraubeinheit (1a) ist, deren Verbinder (2) eine Schraube (2a) ist, wobei der Verbinderschaft (6) ein Schraubenschaft (6a) ist, der über ein Außengewinde (15a) als Verbindungsstruktur (15) verfügt.

## Claims

1. A method for producing a connection unit (1), wherein the connection unit (1) comprises a connector (2), said connector being with a connector shank (6) which comprises a connection structure (15) and with a connector head (12) which is arranged on the connector shank (6) and projects radially beyond the connector shank (6), and wherein the connection unit (1) further comprises an annular disc (3) which comprises a plastically deformable annular disc body (23) and a through-hole (24) which is framed by the annular disc body (23) and through which the connector shank (6) passes, wherein the annular disc body (23) has an outer peripheral surface (27) which defines an outer contour (34) of the disc body (23) and an inner peripheral surface (26) which peripherally delimits the through-hole (24) and defines an inner contour (33) of the disc body (23), wherein for the captive fixation of the disc (3) which is seated on the connector shank (6), the inner contour (33) of the disc body (23) in the state of the disc (3) in which it is seated on the connector shank (6) and starting from a preliminary inner contour (33a) which permits the prior sticking of the disc (3) onto the connector shank (6) is reshaped by way of plastic reshaping of the disc body (23) into a final inner contour (33) which effects a captive fixed holding of the disc (3) on the connector shank (6) and which differs from the preliminary inner contour (33a), **characterised in that**, the annular disc body (23) before its plastic reshaping is provided with a preliminary outer contour (34a) which differs from a circular shape, and is put onto the connector shank (6), and the plastic reshaping of the annular disc body (23) which creates the final inner contour (33) of the annular disc body (23) is carried out by way of radial deformation forces (37) being introduced into the outer peripheral surface (27) which has the preliminary outer contour (34a), of the disc body (23) which is seated on the connector shank (6), wherein the plastic reshaping of the annular disc body (23) is designed such that the final inner contour (33) of the annular disc body (23) differs from a circular shape and simultaneously a final outer contour (34) of the disc body (23) which differs from the preliminary outer contour (34a) and which is at least essentially circular is also shaped.

2. The method according to claim 1, **characterised in that** the plastic reshaping of the annular disc body (23) is designed such that the inner peripheral surface (26) which defines the final inner contour (33) comprises surface sections (38a, 39a) of a differently large radial distance to the centre (25) of the disc (3) which successively alternate in the circumferential direction (28) of the through-hole (24).

3. The method according to claim 1 or 2, **characterised in that** the plastic reshaping of the annular disc body (23) is designed such that the inner peripheral surface (26) which defines the final inner contour (33) comprises concavely curved and convexly curved surface sections (38a, 39a) which successively alternate in the circumferential direction (28) of the through-hole (24) or **in that** the plastic reshaping of the annular disc body (23) is designed such that the final inner contour (33) is concavely curved throughout, wherein surface sections (38a, 39a) of the inner peripheral surface (26) of a differently large curvature alternate in the circumferential direction (28) of the through-hole (24).

4. The method according to one of the claims 1 to 3, **characterised in that** the annular disc body (23) before its plastic deformation is provided with a round preliminary inner contour (33a) and put onto the connector shank (6), wherein the preliminary inner contour (33a) is expediently designed in an at least essentially circular manner and/or **in that** the annular disc body (23) before its plastic reshaping is provided with a preliminary outer contour (34a) which is convexly curved all around, wherein surface sections (38b, 39b) of the outer peripheral surface (27) which are of a differently large curvature alternate in the circumferential direction (28) of the through-hole (24).

5. The method according to one of the claims 1 to 6, **characterised in that** the annular disc body (23) before its plastic reshaping is provided with a polygonal preliminary outer contour (34a) which is expediently convexly rounded all around.

6. The method according to one of the claims 1 to 7, **characterised in that** the annular disc body (23) before its plastic reshaping is provided with a trilobular preliminary outer contour (34a) and put onto the connector shank (6) and/or **in that** the annular disc body (23) before its plastic reshaping is provided with an oval or elliptical preliminary outer contour (34a) and put onto the connector shank (6).

7. The method according to one of the claims 1 to 9, **characterised in that** the annular disc body (23) before its plastic reshaping is provided with such a preliminary outer contour (34a) and preliminary inner contour (33a) that it has ring segments (35, 38, 39) with a radial thickness which differs from one another which alternate successively in the circumferential direction (28) of the through-hole (24), so that ring segments of a minimal radial thickness (35, 39) alternate with ring segments of a maximal radial thickness (35, 38) in the circumferential direction (28) of the through-hole (24), wherein the plastic reshaping of the annular disc body (23) is carried out such that such that the disc body (23) after the plastic reshaping continues to have ring segments of a minimal radial thickness (35, 39) and ring segments of a maximal radial thickness (35, 38) which successively alternate in the circumferential direction (28) of the through-hole (24), wherein the surface sections (38a, 39a) of the inner peripheral surface (26) and of the outer peripheral surface (27), said surface sections being formed on the ring segments (35, 38) of maximal radial thickness, have a smaller distance to the centre (25) of the disc (3) after the plastic reshaping than before the plastic reshaping.

8. The method according to one of the claim 1 to 7, **characterised in that** the annular disc body (23) given its plastic reshaping is pressed radially onto the connector shank (6) in a manner such that it is fixed at its inner peripheral surface (26) on the connector shank (6) with a radial press fit and/or **in that** before mounting the disc (3), which is to be captively fixed, the connector shank (6) is provided with an annular-groove-like deepening (18) which is delimited by a front deepening flank (22) which faces the connector head (12), wherein before the plastic reshaping of the disc body (23), the disc (3) is put onto the connector shank (6) such that it comes to lie axially at the height of the annular-groove-like deepening (18), wherein the subsequent plastic reshaping of the disc body (23) is effected in a manner such that the inner peripheral surface (26) of the disc body (23) immerses at least partially into the annular-groove-like deepening (18).

9. The method according to one of the claims 1 to 8, **characterised in that** the disc body (23) of the disc (3) with its preliminary inner contour (33a) and its preliminary outer contour (34a) is produced as a punched part and/or **in that** the connection unit (1) is produced as a screw unit (1a), wherein the connector (2) is designed as a screw (2a) and the connector shank (6) is provided with a connection structure (15) which is designed as an outer thread (15a).

10. A connection unit, with a connector (2) which comprises a connector shank (6) which is provided with a connection structure (15) and a connector head (12) which is arranged on the connector shank (6), wherein the connector head (12) projects radially beyond the connector shank (6), and with an annular disc (3) which comprises an annular disc body (23) which consists of a plastically deformable material and which frames a through-hole (24) through which the connector shank (6) passes, said through-hole being peripherally delimited by an inner peripheral surface (26) of the disc body (23) which defines an inner contour (33) of the disc body (23) which is produced by the plastic material reshaping of the disc body (23), wherein this inner contour (23) is designed such that the disc (3), by way of interaction with the connector shank (6), is captively held on the connector hank (6), and wherein the annular disc body (23) has an outer peripheral surface (27) which defines an outer contour (34) of the disc body (23), **characterised in that** the annular disc body (23) is designed as a reshaping part, wherein the inner contour (33) is based on a radial plastic reshaping of the disc body (23), said disc body being provided in a holed form and said reshaping having been created by the introduction of radial deformation forces (37) into the outer peripheral surface (27) of the disc body (23), that the outer contour (34) of the annular disc body (23) is designed at least essentially circularly, and that the inner contour (33) of the annular disc body (23) is designed in a non-circular manner.

11. The connection unit according to claim 10, **characterised in that** the inner peripheral surface (26) of the annular disc body (23) which defines the inner contour (33) comprises surface sections (38a, 39a) of a differently large radial distance to the centre (25) of the disc which successively alternate in the circumferential direction (28) of the through-hole (24).

12. The connection unit according to claim 10 or 11, **characterised in that** the inner contour (33) of the annular disc body (23) is concavely curved throughout in the circumferential direction (28) of the through-hole (24), wherein surface sections (38a, 39a) of the inner peripheral surface (26) of a differently large curvature alternate in the circumferential direction (28) of the through-hole (24). and/or **in that** the inner contour (33) of the annular disk body (23) is designed in an oval or elliptical manner.

13. The connection unit according to claim 10 or 11, **characterised in that** the inner peripheral surface (26) of the annular disc body (23) which defines the inner contour (33) comprises concavely curved and convexly curved surface sections (38a, 39a) which successively alternate in the circumferential direction (28) of the through-hole (24).

14. The connection unit according to claim 10 to 13, **characterised in that** the outer contour (43) and the inner contour (33) of the annular disc body (23) are shaped in a manner such that the annular disc body (23) comprises ring segments (35, 38, 39) with a radial thickness which differs from one another in a successively alternating manner in the circumferential direction (28) of the through-hole (24), so that ring segments of a minimal radial thickness (35, 39) alternate with ring segments of a maximal radial thickness (35, 38) in the circumferential direction (28) of the through-hole (24), wherein the surface sections (38a, 39a) of the inner peripheral surface (26) which are formed on the ring segments of a maximal radial thickness (35, 38) have a lower radial distance to the centre (25) of the disc (3) than the ring segments (35, 39) of a minimal radial thickness.

15. The connection unit according to claim 10 to 14, **characterised in that** the connection unit (1) is a screw unit (1a) whose connector (2) is a screw (2a), wherein the connector shank (6) is a screw shank (6a) which comprises an outer thread (15a) as a connection structure (15).

## Revendications

1. Procédé de fabrication d'une unité de raccordement (1), dans lequel l'unité de raccordement (1) dispose d'un raccord (2) avec un arbre de raccord (6) présentant une structure de raccordement (15) et avec une tête de raccord (12) disposée sur l'arbre de raccord (6), dépassant radialement l'arbre de raccord (6), et dans lequel l'unité de raccordement (1) dispose par ailleurs d'un disque (3) annulaire qui présente un corps de disque annulaire (23) plastiquement déformable et un trou de passage (24) encadré par le corps de disque annulaire (23), traversé par l'arbre de raccordement (6), dans lequel le corps de disque annulaire (23) a une surface périphérique extérieure (27) définissant un contour extérieur (34) du corps de disque (23) et une surface périphérique intérieure (26) délimitant en périphérie le trou de passage (24), définissant un contour intérieur (33) du corps de disque (23), dans lequel la forme du contour intérieur (33) du corps de disque (23) dans l'état du disque (3) siégeant sur l'arbre de raccord (6) est modifiée en partant d'un contour intérieur provisoire (33a) permettant l'emboîtement préalable du disque (3) sur l'arbre de raccord (6) par modification plastique de la forme du corps de disque (23) en un contour intérieur définitif (33) entraînant une immobilisation imperdable du disque (3) sur l'arbre de raccord (6), divergeant du contour intérieur provisoire (33a) pour bloquer de manière imperdable le disque (3) siégeant sur l'arbre de raccord (6),
**caractérisé en ce**
- **que** le corps de disque (23) annulaire est fourni, avant la modification plastique de sa forme, avec un contour extérieur provisoire (34a) divergeant d'une forme circulaire et est emboîté sur l'arbre de raccord (6),
- et **que** la modification plastique de la forme du corps de disque annulaire (23) donnant lieu au contour intérieur définitif (33) du corps de disque (23) annulaire est mise en oeuvre en ce que des forces de déformation radiales (37) sont appliquées dans la surface périphérique extérieure (27), présentant le contour extérieur provisoire (34a), du corps de disque (23) siégeant sur l'arbre de raccord (6),
- dans lequel la modification plastique de la forme du corps de disque (23) annulaire est exécutée de telle sorte que le contour intérieur définitif (33) du corps de disque (23) annulaire diverge d'une forme circulaire et un contour extérieur définitif (34) au moins sensiblement circulaire divergeant du contour extérieur provisoire (34a), du corps de disque (23) est façonné simultanément.

2. Procédé selon la revendication 1, **caractérisé en ce que** la modification plastique de la forme du corps de disque (23) annulaire est exécutée de telle sorte que la surface périphérique intérieure (26) définissant le contour intérieur définitif (33) dispose de sections de surface (38a, 39a) se suivant les unes les autres en alternance dans la direction périphérique (28) du trou de passage (24), présentant une distance radiale à valeur différente par rapport au centre (25) du disque (3).

3. Procédé selon la revendication 1 ou 2, **caractérisé en ce que** la modification plastique de la forme du corps de disque (23) annulaire est exécutée de telle sorte que la surface périphérique intérieure (26) définissant le contour intérieur définitif (33) dispose de sections de surface (38a, 39a) incurvées de manière concave et incurvées de manière convexe se suivant les unes les autres en alternance dans la direction périphérique (28) du trou de passage (24), ou que la modification plastique de la forme du corps de disque (23) annulaire est exécutée de telle sorte que le contour intérieur définitif (33) est incurvé toujours de manière concave, dans lequel des sections de surface (38a, 39a) de la surface périphérique intérieure (26) présentant une incurvation à importance différente alternent dans la direction périphérique (28) du trou de passage (24).

4. Procédé selon l'une quelconque des revendications 1 à 3, **caractérisé en ce que** le corps de disque (23) annulaire est fourni avant la modification plastique de sa forme avec un contour intérieur provisoire (33a) rond et est emboîté sur l'arbre de raccord (6), dans lequel le contour intérieur provisoire (33a) est configuré de manière opportune au moins sensiblement de manière circulaire, et/ou que le corps de disque (23) annulaire est fourni, avant la modification plastique de sa forme, avec un contour extérieur provisoire (34a) incurvé sur le pourtour de manière convexe, dans lequel des sections de surface (38b, 39b) de la surface périphérique extérieure (27) présentant une incurvation à importance différente alternent dans la direction périphérique (28) du trou de passage (24).

5. Procédé selon l'une quelconque des revendications 1 à 4, **caractérisé en ce que** le corps de disque (23) annulaire est fourni, avant la modification plastique de sa forme, avec un contour extérieur provisoire (34a) polygonal, qui est arrondi de manière opportune sur le pourtour de manière convexe.

6. Procédé selon l'une quelconque des revendications 1 à 5, **caractérisé en ce que** le corps de disque (23) annulaire est fourni, avant la modification plastique de sa forme, avec un contour extérieur provisoire (34a) trilobulaire et est emboîté sur l'arbre de raccord (6), et/ou que le corps de disque (23) annulaire est fourni, avant la modification plastique de sa forme, avec un contour extérieur provisoire (34a) ovale ou elliptique et est emboîté sur l'arbre de raccord (6).

7. Procédé selon l'une quelconque des revendications 1 à 6, **caractérisé en ce que** le corps de disque (23) annulaire est fourni, avant la modification plastique de sa forme, avec un contour extérieur provisoire (34a) et un contour intérieur provisoire (33a) tels qu'il a des segments annulaires (35, 38, 39) présentant une épaisseur radiale divergeant les unes des autres, se suivant les uns les autres en alternance dans la direction périphérique (28) du trou de passage (24) si bien que des segments annulaires présentant une épaisseur radiale minimale (35, 39) alternent avec des segments annulaires présentant une épaisseur radiale maximale (35, 38) dans la direction périphérique (28) du trou de passage (24), dans lequel la modification plastique de la forme du corps de disque (23) annulaire est exécutée de telle sorte que le corps de disque (23) dispose, après la modification plastique de la forme, par ailleurs de segments annulaires présentant une épaisseur radiale minimale (35, 39) et de segments annulaires présentant une épaisseur radiale maximale (35, 38) se suivant les uns les autres en alternance dans la direction périphérique (28) du trou de passage (24), dans lequel les sections de surface (38a, 39a), réalisées sur les segments annulaires présentant une épaisseur radiale maximale (35, 38), de la surface périphérique intérieure (26) et de la surface périphérique extérieure (27) ont, après la modification plastique de la forme, une distance inférieure par rapport au centre (25) du disque (3) qu'avant la modification plastique de la forme.

8. Procédé selon l'une quelconque des revendications 1 à 7, **caractérisé en ce que** le corps de disque (23) annulaire est pressé, lors de la modification plastique de sa forme, de telle manière radialement sur l'arbre de raccord (6) qu'il est bloqué sur l'arbre de raccord (6) avec un ajustement serré radial sur sa surface périphérique intérieure (26), et/ou que l'arbre de raccord (6) est fourni, avant l'emboîtement du disque (3) à bloquer de manière imperdable, avec un renfoncement de type rainure annulaire (18), qui est délimité par un flanc de renfoncement avant (22) tourné vers la tête de raccord (12), dans lequel le disque (3) est emboîté, avant la modification plastique de la forme du corps de disque (23), de telle sorte sur l'arbre de raccord (6) qu'il en vient se placer axialement à hauteur du renfoncement (18) de type rainure annulaire, dans lequel la modification plastique qui suit de la forme du corps de disque (23) est effectuée de telle manière que la surface périphérique intérieure (26) du corps de disque (23) s'enfonce au moins en partie dans le renfoncement (18) de type rainure annulaire.

9. Procédé selon l'une quelconque des revendications 1 à 8, **caractérisé en ce que** le corps de disque (23) du disque (3) est produit avec son contour intérieur provisoire (33a) et son contour extérieur provisoire (34a) en tant qu'une pièce estampée, et/ou que l'unité de raccordement (1) est fabriquée en tant qu'unité de vissage (1a), dans lequel le raccord (2) est réalisé en tant que vis (2a) et l'arbre de raccord (6) est pourvu d'une structure de raccordement (15) réalisé en tant que filetage extérieur (15a).

10. Unité de raccordement avec un raccord (2), qui présente un arbre de raccord (6) pourvu d'une structure de raccordement (15) et une tête de raccord (12) disposée sur l'arbre de raccord (6), dans laquelle la tête de raccord (12) dépasse radialement l'arbre de raccord (6), et avec un disque (3) annulaire, qui présente un corps de disque (23) annulaire constitué d'un matériau plastiquement déformable, qui encadre un trou de passage (24) traversé par l'arbre de raccord (6), qui est délimité en périphérie par une surface périphérique intérieure (26) du corps de disque (23), qui définit un contour intérieur (33) généré par la modification plastique de la forme du matériau du corps de disque (23), dans laquelle ledit contour intérieur (23) est configuré de telle sorte que le disque (3) est maintenu sur l'arbre de raccord (6) de manière imperdable en coopération avec l'arbre de raccord (6), et dans laquelle le corps de disque (23) annulaire a une surface périphérique extérieure (27) définissant un contour extérieur (34) du corps de disque (23),
**caractérisée en ce**
- **que** le corps de disque (23) annulaire est réalisé en tant qu'une partie à forme modifiée, dans laquelle le contour intérieur (33) repose sur une modification plastique radiale de la forme du corps de disque (23) fourni sous une forme perforée, qui a été entraînée par l'application de forces de déformation (37) radiales dans la surface périphérique extérieure (27) du corps de disque (23),
- **que** le contour extérieur (34) du corps de disque (23) annulaire est configuré au moins sensiblement de manière circulaire,
- et **que** le contour intérieur (33) du corps de disque (23) annulaire est configuré de manière non circulaire.

11. Unité de raccordement selon la revendication 10, **caractérisée en ce que** la surface périphérique intérieure (26), définissant le contour intérieur (33), du corps de disque (23) annulaire dispose de sections de surface (38a, 39a) présentant une distance radiale à valeur différente par rapport au centre (25) du disque, se suivant les unes les autres en alternance dans la direction périphérique (28) du trou de passage (24).

12. Unité de raccordement selon la revendication 10 ou 11, **caractérisée en ce que** le contour intérieur (33) du corps de disque (23) annulaire est incurvé toujours de manière concave dans la direction périphérique (28) du trou de passage (24), dans laquelle des sections de surface (38a, 39a) de la surface périphérique intérieure (26) présentant une incurvation à importance différente alternent dans la direction périphérique (28) du trou de passage (24), et/ou que le contour intérieur (33) du corps de disque (23) annulaire est configuré de manière ovale ou elliptique.

13. Unité de raccordement selon l'une quelconque des revendications 10 ou 11, **caractérisée en ce que** la surface périphérique intérieure (26), définissant le contour intérieur (33), du corps de disque (23) annulaire dispose de sections de surface (38a, 39a) incurvées de manière concave et incurvées de manière convexe se suivant les unes les autres en alternance dans la direction périphérique (28) du trou de passage (24).

14. Unité de raccordement selon l'une quelconque des revendications 10 à 13, **caractérisée en ce que** le contour extérieur (43) et le contour intérieur (33) du corps de disque (23) annulaire sont formés de telle manière que le corps de disque (23) annulaire dispose de segments annulaires (35, 38, 39) présentant une épaisseur radiale divergeant les unes des autres, se suivant les uns les autres en alternance dans la direction périphérique (28) du trou de passage (24) si bien que des segments annulaires présentant une épaisseur radiale minimale (35, 39) alternent avec des segments annulaires présentant une épaisseur radiale maximale (35, 38) dans la direction périphérique (28) du trou de passage (24), dans lequel les sections de surface (38a, 39a), réalisées sur les segments annulaires présentant une épaisseur radiale maximale (35, 38), de la surface périphérique intérieure (26) ont une distance radiale plus petite par rapport au centre (25) du disque (3) que les segments annulaires présentant une épaisseur radiale minimale (35, 39).

15. Unité de raccordement selon l'une quelconque des revendications 10 à 14, **caractérisée en ce que** l'unité de raccordement (1) est une unité de vissage (1a), dont le raccord (2) est une vis (2a), dans laquelle l'arbre de raccord (6) est une tige de vissage (6a) qui dispose d'un filetage extérieur (15a) en tant que structure de raccordement (15).
